# EUROPEAN PATENT SPECIFICATION

(11) **EP 2 704 337 B1**
(45) Date of publication and mention of the grant of the patent: **27.03.2019**
(21) Application number: 12777081.6
(22) Date of filing: 24.04.2012
(51) Int. Cl.: H04B 7/185, H04B 7/204

(54) **RELAY SATELLITE AND SATELLITE COMMUNICATION SYSTEM**
RELAISSATELLIT UND SATELLITENKOMMUNIKATIONSSYSTEM
SATELLITE RELAIS ET SYSTÈME DE COMMUNICATION PAR SATELLITE

(30) Priority: 28.04.2011 JP 2011101854
(43) Date of publication of application: 05.03.2014
(73) Proprietor: Mitsubishi Electric Corporation, Tokyo 100-8310 (JP)
(72) Inventor: FUJIMURA, Akinori, Tokyo 100-8310 (JP); IZUMI, Kyoichiro, Tokyo 100-8310 (JP); KUZE, Toshiyuki, Tokyo 100-8310 (JP)
(74) Representative: Pfenning, Meinig & Partner mbB
(86) International application number: PCT/JP2012/060995
(87) International publication number: WO 2012/147753

(56) References cited:
- EP-A2- 0 854 590
- WO-A1-93/09613
- WO-A1-2008/028942
- WO-A2-2004/073229
- JP-A- 2011 029 720
- US-A- 3 095 538
- US-A- 3 711 855
- US-A1- 2006 111 056

## Description

### Field

The present invention relates to a relay satellite that relays various signals from a narrowband signal to an ultrawideband signal and a satellite communication system using the relay satellite.

### Background

In the past, a relay satellite equipped with a digital channelizer that relays data from a plurality of beams to a plurality of beams has been able to realize data relay of a wideband signal from each beam by increasing each sampling speed of an AD converter (A/D), a DA converter (D/A) and a digital signal processing unit. Such a technique related to the relay satellite equipped with the digital channelizer is disclosed in Patent Literature 1 listed below.

### Citation List

### Patent Literature

Patent Literature 1: Japanese Patent Application Laid-open No. 2006-516867

### Summary

### Technical Problem

However, according to the above-mentioned related art, when a broadband signal is processed, high-speed sampling of, for example, 1.4 Gsps is necessary, and so the sampling speed of the A/D and D/A and the processing speed of a digital signal processing unit configured with {a demultiplexing unit, a multiplexing unit and a switch unit} increase, thereby leading to a problem in that power consumption of the satellite increases.

Further, since space devices having excellent resistance to radiation are lower in sampling speed and processing speed than consumer devices generally used on the ground, there is a problem in that it is difficult to further increase a band of relay satellites due to performance limits of the space devices.

In addition, according to the above-mentioned related art, a single broadband signal is processed by a set of {A/D, D/A, digital demultiplexing/multiplexing}. Therefore, if any one of {A/D, D/A, digital demultiplexing/multiplexing} is broken or if an input signal is saturated due to an unexpected interference wave input or the like, then a problem occurs in that communication is impossible.

Document US 3711855A discloses an on-board processing system for a communication satellite which employs spot beam antennas. Since each spot beam antenna in general, sees only one ground station, this allows the same frequencies to be used by all stations. Using this space-division technique, the on-board processing involves the switching from origin grouping of incoming communications signals to destination grouping of outgoing communications transmissions. This switching is accomplished by means of a distribution frame. The distribution frame includes storage registers which logically control the partitioning of the voice-channel segments and the switching times. The contents of all of the storage registers can be changed by command.

Document WO 93/09613A1 discloses a satellite communication system comprising a dynamic constellation of satellites. The system includes a number of low-earth orbiting spacecraft which travel in orbital planes. Each of the individual spacecraft functions as an independent sovereign switch which knows the position of its neighbours, and independently handles traffic without ground control. The satellites are capable of transporting calls directly to users of portable, mobile and fixed radio terminals; and via gateways to users of the public switched telephone network. This document offers direct communication between satellites of the constellation and individuals using lightweight, portable telephones. The direct link is made possible by miniature antennas coupled to the handheld phones.

Document WO2004/073229 A2 discloses a relay satellite.

The present invention is made in light of the foregoing, and an object thereof is to provide a relay satellite and a satellite communication system, which are capable of relaying a signal of a band broader than in the past and are robust over failure or interference.

### Solution to Problem

In order to solve the above-mentioned problems and achieve the object, the present invention provides a relay satellite, comprising: a plurality of reception antennas; a plurality of reception processing units; a plurality of transmission processing units; a plurality of transmission antennas; a first switch unit that outputs a signal received by each of the plurality of reception antennas to one or more of the reception processing units; a second switch unit that outputs a digital reception signal obtained by reception processing performed by each of the plurality of reception processing units to one or more of the transmission processing units; and a third switch unit that outputs an analog signal obtained by transmission processing performed by each of the plurality of transmission processing units to one of the transmission

antennas, wherein when a reception signal having a band broader than a band processable by the reception processing unit is inputted, the first switch unit outputs the broadband reception signal to the plurality of reception processing units, and when a signal having a band broader than a band processable by the reception processing unit is inputted, the reception processing unit performs reception processing on a part of the band of the input signal. Advantageous Effects of Invention

According to the present invention, there is an advantageous effect that a broadband signal exceeding performance limits of the space devices can be relayed. Brief Description of Drawings
FIG. 1 is a diagram illustrating a configuration of a relay satellite according to the present invention.
FIG. 2 is a diagram illustrating an internal configuration example of components performing reception side processing in a relay satellite.
FIG. 3 is a diagram illustrating an internal configuration example of components performing transmission side processing in a relay satellite.
FIG. 4 is a diagram illustrating a configuration example of a receiving station.
FIG. 5 is a diagram illustrating a configuration example of a synthesizing unit disposed in a receiving station.
FIG. 6 is a chart illustrating an outline of a signal relay operation example.
FIG. 7 is a chart illustrating an example of a signal relay operation (reception side).
FIG. 8 is a chart illustrating a relation of spectra of signals processed by a demultiplexing unit of a reception port #n and a demultiplexing unit of a reception port #n+1.
FIG. 9 is a chart illustrating an example of a signal received by a reception port #2.
FIG. 10 is a chart illustrating an example of a signal relay operation (transmission side).
FIG. 11 is a chart illustrating an example of a broadband signal to be transmitted from a relay satellite to a receiving station.
FIG. 12 is a chart illustrating a delay process example in a signal relay operation.
FIG. 13 is a chart illustrating an example of a cross-correlation property.
FIG. 14 is a chart illustrating an example of a signal vector synthesized by a receiving station.
FIG. 15 is a diagram illustrating a frame format of a signal to be processed by a relay satellite according to a second embodiment.
FIG. 16 is a diagram illustrating a configuration example of a receiving station that receives a signal relayed by the relay satellite according to the second embodiment.
FIG. 17 is a diagram illustrating a configuration example of a digital switch matrix unit according to a fourth embodiment.
FIG. 18 is a chart illustrating an example of processing of a phase compensating unit disposed in a digital switch matrix unit.
FIG. 19 is a chart illustrating an example of a relation of same components of reception signals inputted to two different reception ports.
FIG. 20 is a chart illustrating an example of a relation of same components of reception signals inputted to two different reception ports.
FIG. 21 is a graph illustrating an operation example of a path delay difference detecting unit disposed in a digital switch matrix unit.
FIG. 22 is a diagram illustrating a configuration example of a digital switch matrix unit according to the fourth embodiment.
FIG. 23 is a chart illustrating an example of a broadband signal to be transmitted from a relay satellite to a receiving station.
FIG. 24 is a chart illustrating an example of a relation of signals which are outputted from two different transmission ports and transmitted from the same transmission antenna.
FIG. 25 is a chart illustrating an example of a cross-correlation property.
FIG. 26 is a chart illustrating the details of a cross-correlation property illustrated in FIG. 13.
FIG. 27 is a diagram illustrating an internal configuration example of a receiving unit that performs reception side processing in a relay satellite according to a sixth embodiment.
FIG. 28 is a diagram illustrating an internal configuration example of a transmitting unit that performs transmission side processing in the relay satellite according to the sixth embodiment.

### Description of Embodiments

Hereinafter, embodiments of a relay satellite and a satellite communication system according to the present invention will be described in detail with reference to the drawings. The invention is not limited to the following embodiments.

### First embodiment

The present embodiment will be described in connection with a relay satellite and a satellite communication system which are capable of relaying a broadband signal using a device having a low sampling speed and a low processing speed.

Further, the present embodiment will be described in connection with an example in which a relay satellite relays, in total, four uplink signals ({A, B, C, D}) from two beam areas to two beam areas, but the present embodiment can be applied to the case in which the number of beams is 3 or more or the case in which five or more signals are relayed.

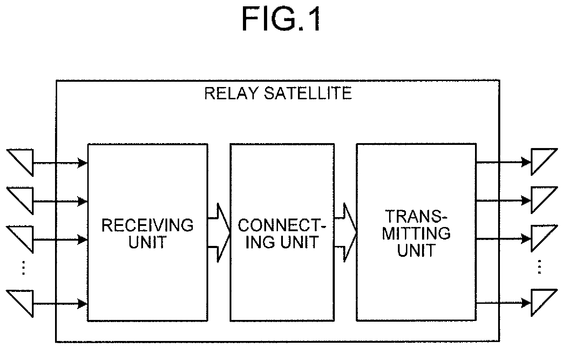

FIG. 1 is a diagram illustrating a configuration example of a relay satellite according to the present invention. The relay satellite includes a receiving unit that receives a signal, a transmitting unit that transmits a signal, a connecting unit that transfers the signal received by the receiving unit to the transmitting unit, a plurality of reception antennas connected to the receiving unit, and a plurality of transmission antennas connected to the transmitting unit, and relays a signal by executing signal processing, which will be described later, on a signal received through the reception antenna and transmitting the processed signal through the transmission antenna.

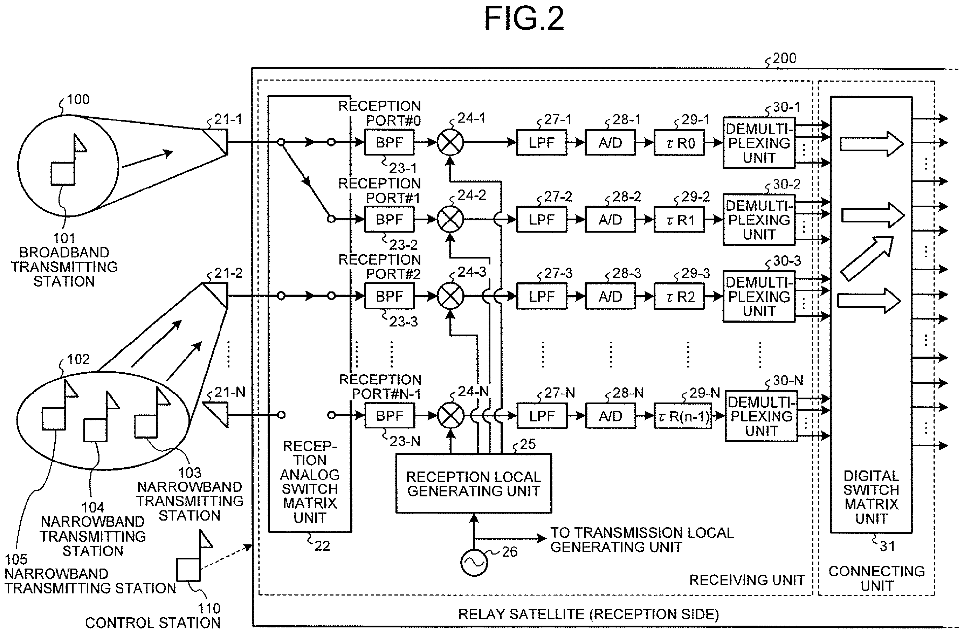

FIG. 2 is a diagram illustrating an internal configuration example of components performing reception side processing in the relay satellite illustrated in FIG. 1, specifically, the receiving unit and the connecting unit. For the sake of convenience of description, a transmission source device (transmitting station) of a relay target signal will also be described.

As illustrated in FIG. 2, a relay satellite 200 includes: reception antennas 21-1 to 21-N that receive signals from a broadband beam area 100 and a narrowband beam area 102; a reception analog switch matrix unit 22; a band pass filters 23-1 to 23-N; mixers 24-1 to 24-N; a reception local generating unit 25; an oscillation source 26; low pass filters (LPFs) 27-1 to 27-N; AD converters (A/Ds) 28-1 to 28-N; delay circuits 29-1 to 29-N; demultiplexing units 30-1 to 30-N; and a digital switch matrix unit 31, as components performing reception side processing. The components from the reception analog switch matrix unit to the demultiplexing unit constitute the receiving unit illustrated in FIG. 1. The digital switch matrix unit constitutes the connecting unit illustrated in FIG. 1.

In FIG. 2, the broadband transmitting station 101 is present in the broadband beam area 100, and narrowband transmitting stations 103, 104 and 105 are present in the narrowband beam area 102.

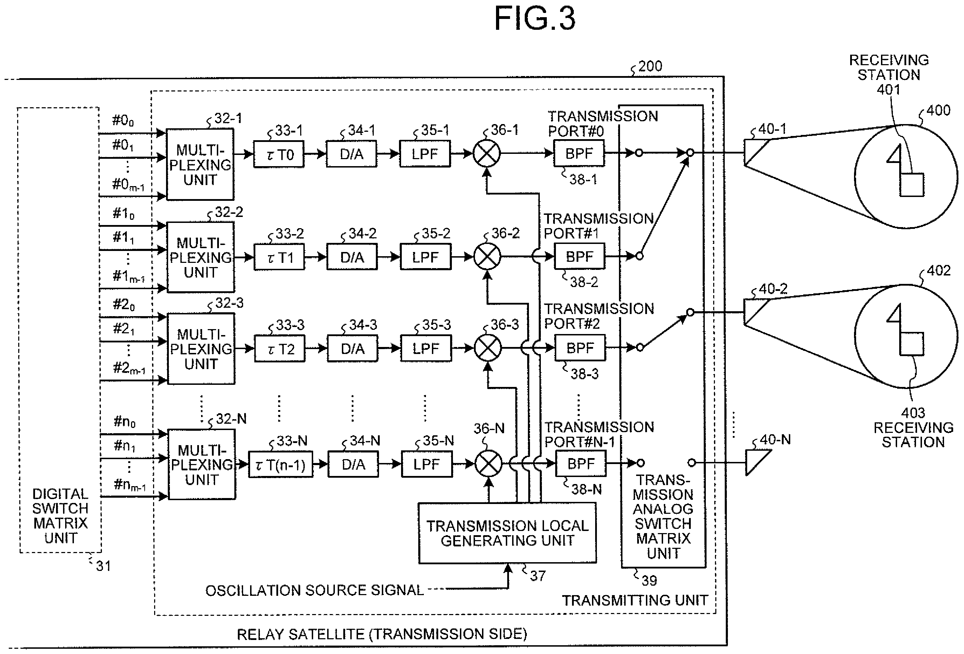

FIG. 3 is a diagram illustrating an internal configuration example of components performing transmission side processing in the relay satellite illustrated in FIG. 1, specifically, the transmitting unit. For the sake of convenience of description, a transmission destination device (receiving station) of a relay target signal will also be described.

As illustrated in FIG. 3, the relay satellite 200 includes: multiplexing units 32-1 to 32-N; delay circuits 33-1 to 33-N; DA converters (D/As) 34-1 to 34-N; low pass filters (LPFs) 35-1 to 35-N; mixers 36-1 to 36-N; a transmission local generating unit 37; band pass filters (BPFs) 38-1 to 38-N; a transmission analog switch matrix unit 39; and transmission antennas 40-1 to 40-N that transmit a signal (relay signal) to beam areas 400 and 402, as components performing transmission side processing. In FIG. 3, a receiving station 401 is present in the beam area 400, and a receiving station 403 is present in the beam area 402.

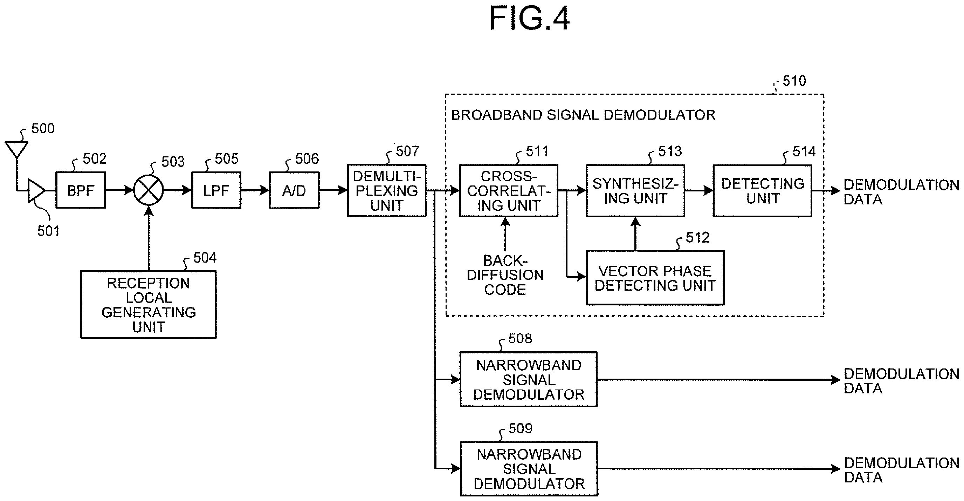

FIG. 4 is a diagram illustrating a configuration example of the receiving station 401 according to the present embodiment, and the receiving station 401 is a spread spectrum receiving station. In other words, in the present embodiment, a relay satellite that relays a signal to a spread spectrum receiving station will be described.

As illustrated in FIG. 4, the receiving station 401 according to the present embodiment includes an antenna 500, an amplifier 501, a band pass filter (BPF) 502, a mixer 503, a reception local generating unit 504, a low pass filter (LPF) 505, an AD converter (A/D) 506, a demultiplexing unit 507, a broadband signal demodulator 510, and narrowband signal demodulators 508 and 509. Further, the broadband signal demodulator 510 includes a cross-correlating unit 511, a vector phase detecting unit 512, a synthesizing unit 513, and a wave detecting unit 514.

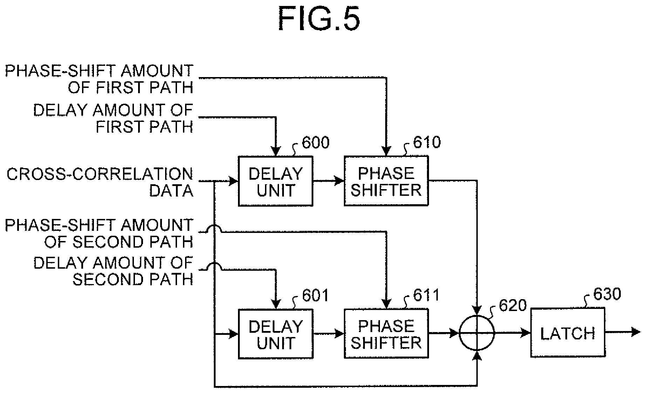

FIG. 5 is a diagram illustrating a configuration example of the synthesizing unit 513 disposed in the receiving station 401. As illustrated in FIG. 5, the synthesizing unit 513 includes delay units 600 and 601 that process a delay amount and cross-correlation data, phase shifters 610 and 611 that phase-shift the data processed by the delay units 600 and 601, an adder 620, and a latch 630.

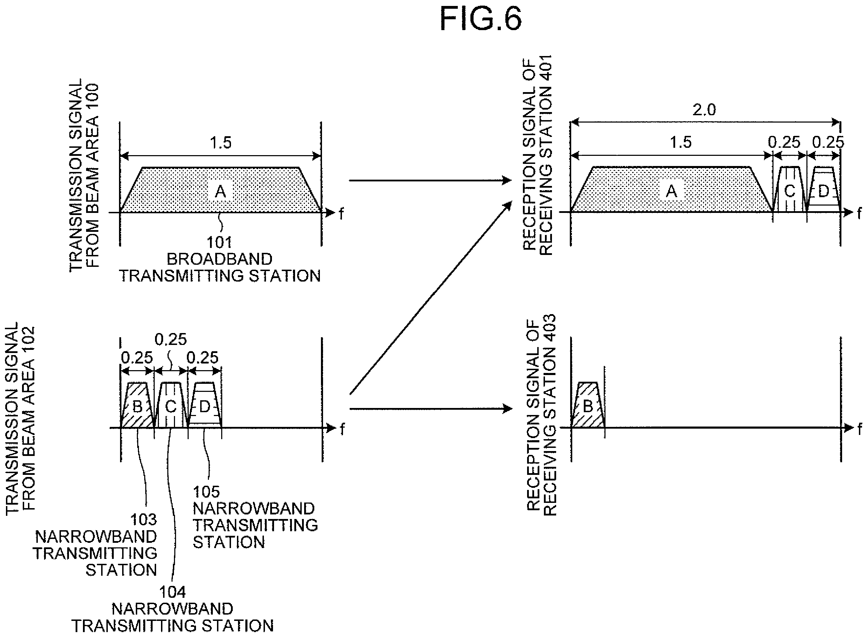

Next, a signal relay process by the relay satellite according to the present embodiment will be described specifically. FIG. 6 is a chart illustrating an example of a signal relay operation by the relay satellite according to the present embodiment.

In the present embodiment, there is described an example in which the relay satellite 200 simultaneously relays the following signals A, B, C and D with a frequency allocation illustrated in FIG. 6.
<1> A broadband signal A from the broadband transmitting station 101 in the broadband beam area 100 is transmitted to the receiving station 401 in the beam area 400.
<2> A narrowband signal B from the narrowband transmitting station 103 in the narrowband beam area 102 is transmitted to the receiving station 403 in the beam area 402.
<3> A narrowband signal C from the narrowband transmitting station 104 in the narrowband beam area 102 is transmitted to the receiving station 401 in the beam area 400.
<4> A narrowband signal D from the narrowband transmitting station 105 in the narrowband beam area 102 is transmitted to the receiving station 401 in the beam area 400.

Here, let us assume that an upper limit of a signal bandwidth that can be processed by a set of {the AD converters, the demultiplexing units, the multiplexing units, and the DA converters} in the relay satellite 200 is set to 1, whereas a bandwidth of the broadband signal A is 1.5 and a bandwidth of each of the narrowband signals B, C and D is 0.25. In the related art, it is difficult to perform digital demultiplexing, multiplexing and switching on the broadband signal A. On the other hand, in the present embodiment, as will be described in detail later, the signals {A, B, C, D} including the broadband signal A are relayed while preventing the quality of communication from deteriorating.

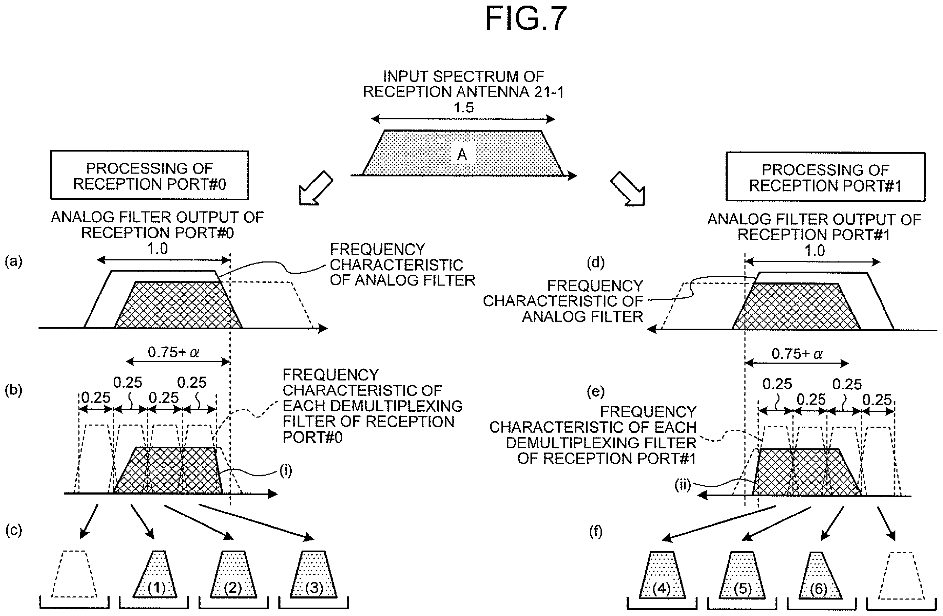

Hereinafter, the reception processing of the relay satellite 200 will be described with reference to FIGS. 2 and 7.

The broadband signal A is received by the reception antenna 21-1 and inputted to the reception analog switch matrix unit 22 as illustrated in FIG. 2. The narrowband signals B, C and D are received by the reception antenna 21-2 and similarly inputted to the reception analog switch matrix unit 22.

The reception analog switch matrix unit 22 is controlled by a command signal from a terrestrial control station 110. The command signal is transmitted from the control station 110 to the relay satellite 200 through a separate line.

In this example, according to the command signal from the control station 110, the reception analog switch matrix unit 22 causes the broadband signal A from the reception antenna 21-1 to be simultaneously inputted to the band pass filter (BPF) 23-1 corresponding a reception port #0 at the subsequent stage and the band pass filter (BPF) 23-2 corresponding to a reception port #1 at the subsequent stage.

The broadband signal A inputted to the BPF 23-1 is subjected to frequency transform from a radio frequency band to an intermediate frequency band or a base band through the mixer 24-1 and the low pass filter (LPF) 27-1 on the subsequent stage. At this time, through an analog filter (pass bandwidth 1.0) configured with the BPF 23-1 and the LPF 27-1, the broadband signal A is cut by nearly half of the band on a lower side from a central frequency thereof, and the bandwidth thereof is reduced from 1.5 to be 0.75+α, as illustrated in FIG. 7(a).

Similarly, the broadband signal A inputted to the BPF 23-2 is frequency-transformed from a radio frequency band to an intermediate frequency band or a base band through the mixer 24-2 and the low pass filter (LPF) 27-2 on the subsequent stage. At this time, through an analog filter (pass bandwidth 1.0) configured with the BPF 23-2 and the LPF 27-2, the broadband signal A is cut by nearly half of the band on an upper side from the central frequency thereof, and the bandwidth thereof is reduced from 1.5 to be 0.75+α, as illustrated in FIG. 7(d).

Through this analog filter process, the signal bandwidth inputted to the AD converters 28-1 and 28-2 at the subsequent stage becomes 1 or less (=0.75+α), and thus an operation can be implemented at the upper limit of the processing speed of the digital device (the AD converters, the DA converters, and the digital circuits) or less. Here, the example in which the broadband signal A is processed in units of half of a bandwidth has been described, but a unit to be processed may not be half of a bandwidth, and any ratio (for example, 0.9+α : 0.6+α) may be employed as long as the signal bandwidth inputted to the AD converters 28-1 and 28-2 at the subsequent stage is 1 or less (the upper limit of the processing speed or less).

The relation of this ratio can be implemented by controlling a frequency of a local signal inputted from the reception local generating unit 25 to the mixer 24-1 and a frequency of a local signal inputted from the reception local generating unit 25 to the mixer 24-2 according to the command signal from the terrestrial control station 110. Since the local signals generated by the reception local generating unit 25 are generated based on the oscillation source 26, a frequency relation of the local signals is stable, and frequency shift does not occur.

A frequency interval of the reception local signals (the reception local signals outputted from the reception local generating unit 25 to the mixers) is set to 1. In other words, as the frequency interval of the reception local signals is set to the same value as the upper limit value (1) of the signal bandwidth that can be processed by each set of {the AD converter, the demultiplexing unit, the multiplexing unit, and the DA converter}, the relay satellite 200 implements the relay process of the broadband signal of a maximum bandwidth N with the configuration of the reception ports #0 to #N-1 illustrated in FIG. 2.

Next, the signal of FIG. 7(a) sampled by the AD converter 28-1 is given a time delay of τR0 [sec] in the delay circuit 29-1 and then divided into four signals including an out-of-band signal in the demultiplexing unit 30-1. When the signal inputted to the AD converter 28-1 is an intermediate frequency (IF) signal, the AD converter 28-1 samples the IF signal. When the signal inputted to the AD converter 28-1 is a base band signal, the AD converter 28-1 samples the base band signal in two systems, that is, an in-phase (I) and a quadrature phase (Q) component.

In the present embodiment, for the sake of convenience of description, the number of demultiplexed signals is four, but the number of demultiplexed signals is not limited to this example, and any integer of 2 or more may be used. Further, delay amounts τR0 to τR(n-1) of the delay circuits 29-1 to 29-N are controlled according to the command signal from the terrestrial control station 110. A setting of each delay amount will be described later.

Characteristics of four filters (demultiplexing filters) used in the demultiplexing unit 30-1 are represented by a dotted line of FIG. 7(b). Through the present process, the demultiplexing unit 30-1 deletes α from the signal having the bandwidth of 0.75+α illustrated in FIG. 7(a), and demultiplexes a signal (i) having the bandwidth of 0.75 illustrated in FIG. 7(b) into three signals (1), (2) and (3) having the bandwidth of 0.25 as illustrated in FIG. 7(c). Further, the demultiplexing unit 30-1 performs demultiplexing even on the out-of-band signal as illustrated in FIG. 7(c).

Similarly, the signal (the bandwidth of 0.75+α) illustrated in FIG. 7(d) sampled by the AD converter 28-2 is given a time delay of τR1 [sec] in the delay circuit 29-2, and then demultiplexed into four signals including the out-of-band signal through four demultiplexing filters having characteristics indicated by dotted lines of FIG. 7(e) in the demultiplexing unit 30-2, as illustrated in FIG. 7(f). In other words, the demultiplexing unit 30-2 deletes α from the signal having the bandwidth of 0.75+α illustrated in FIG. 7(d), and demultiplexes a signal (ii) having the bandwidth of 0.75 illustrated in FIG. 7(e) into three signals (4), (5) and (6) having the bandwidth of 0.25 as illustrated in FIG. 7(f).

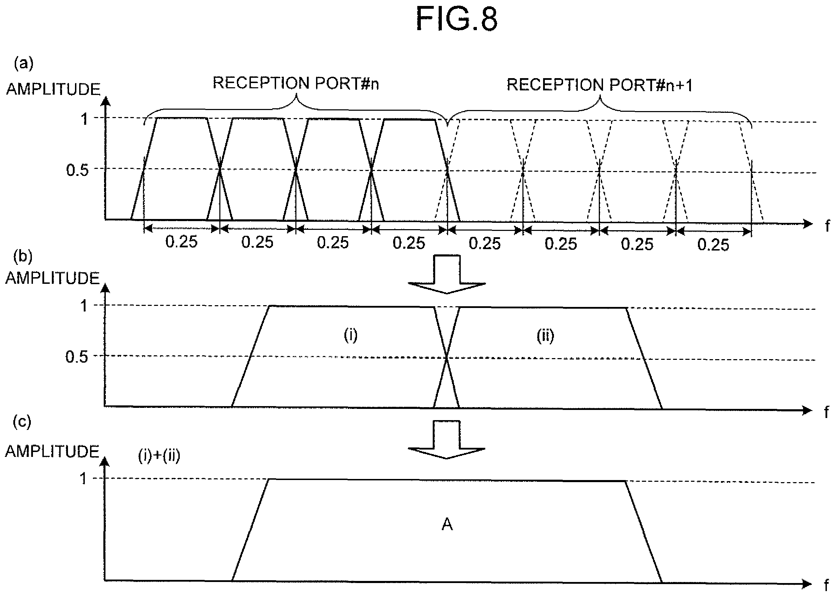

Relations of frequency versus amplitude characteristics of demultiplexing unit corresponding to the ports are illustrated in FIG. 8. In FIG. 8(a), four frequency versus amplitude characteristics represented by solid lines are characteristics of four filters disposed in the demultiplexing unit corresponding to the reception port #n, and four frequency versus amplitude characteristics represented by dotted lines are characteristics of four filters disposed in the demultiplexing unit corresponding to the reception port #n+1.

As illustrated in FIG. 8(a), a characteristic of a filter used by each demultiplexing unit is designed to overlap in characteristic between adjacent filters, including between the reception port #n and the reception port #n+1, wherein an amplitude at a point at which characteristics of filters intersect is set to 0.5, and the sum of the frequency versus amplitude characteristics of the filters is set to 1.

Further, when a frequency versus phase characteristic of each filter illustrated in FIG. 8(a) has no discontinuity and is designed to be linear, even though the input signal A is demultiplexed into six signals (1), (2), (3), (4), (5) and (6) (see FIGS. 7(c) and 7(f)), for example, the signals (i) and (ii) are restored by the multiplexing process performed by the multiplexing units 32-1 to 32-N at the subsequent stage (FIG. 8(b)), and the original signal A is restored by the signal synthesizing process in the transmission analog switch matrix unit 39 (FIG. 8(c)).

Here, the frequency versus phase characteristic of each filter illustrated in FIG. 8(a) can be designed to be linear in a reception port (the reception port #n, the reception port #n+1) since the demultiplexing units 30-1 to 30-N are configured with digital circuits. Meanwhile, it is difficult to cause the frequency versus phase characteristic of each filter to be linear even between the reception port #n and the reception port #n+1 since reception ports are different from each other in characteristic of an analog filter and each reception local signal has a phase noise characteristic. The countermeasure against this will be described later.

Next, processing of the relay satellite 200 related to the narrowband signal {B, C, D} which is an uplink signal from the narrowband beam area 102 will be described. In this example, the reception analog switch matrix unit 22 inputs the signal {B, C, D} from the reception antenna 21-2 to the band pass filter (BPF) 23-3 corresponding to the reception port #2 according to the command signal from the control station 110.

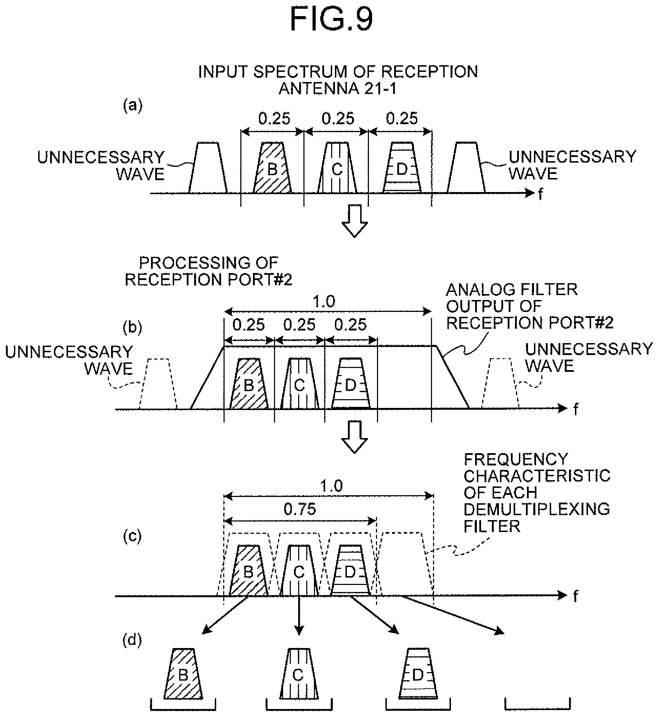

The narrowband signal {B, C, D} inputted to the BPF 23-3 is frequency-transformed from the radio frequency band to the intermediate frequency band or the base band through the mixer 24-3 and the low pass filter (LPF) 27-3. At this time, the analog filter configured with the BPF 23-3 and the LPF 27-3 extracts the signal {B, C, D}, and removes unnecessary waves when there is an unnecessary wave in an adjacent frequency band (see FIGS. 9(a) and 9(b)).

The signal {B, C, D} illustrated in FIG. 9(b) sampled by the AD converter 28-3 is given a time delay of τR2 [sec] in the delay circuit 29-3, and then demultiplexed into four signals including the out-of-band signal through four filter characteristics indicated by dotted lines of FIG. 9(c) by the demultiplexing unit 30-3, as illustrated in FIG. 9(d). Thus, the demultiplexing unit 30-3 decomposes (demultiplexes) the signal {B, C, D} illustrated in FIG. 9(c) into three narrowband signals B, C and D.

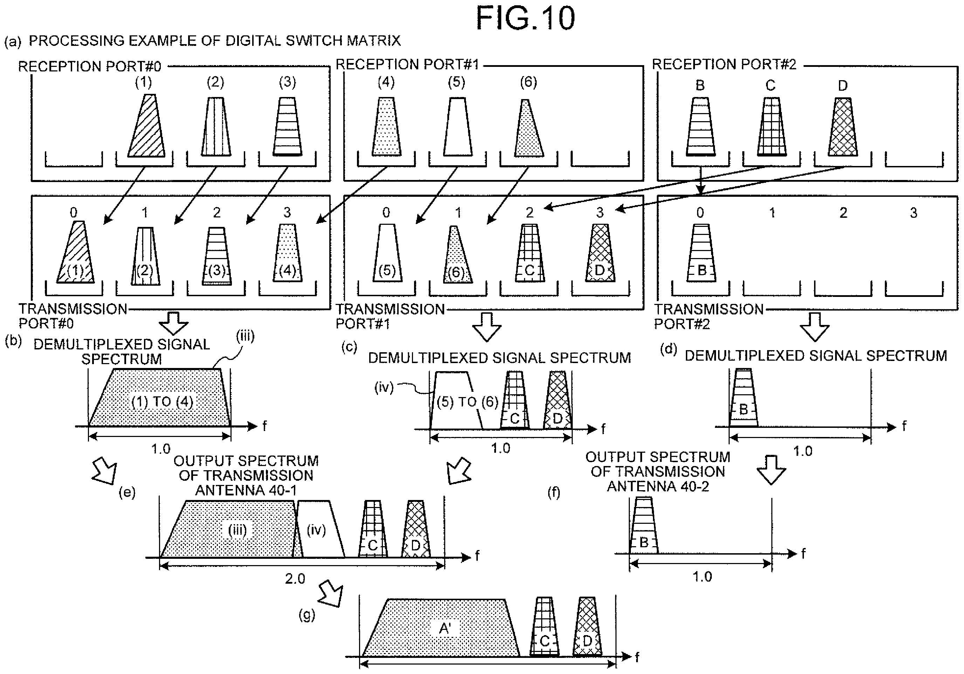

Next, an operation example in which the relay satellite 200 transmits a signal will be described with reference to FIGS. 3 and 10.

The digital switch matrix unit 31 receives the signals outputted from the demultiplexing units at the previous stage, and assigns the inputted signals to the multiplexing units 32-1 to 32-N at the subsequent stage. In the present embodiment, a switch process illustrated in FIG. 10(a) is performed using the signals (1), (2) and (3) outputted from the demultiplexing unit 30-1, the signals (4), (5) and (6) outputted from the demultiplexing unit 30-2, and the signals B, C and D outputted from the demultiplexing unit 30-3.

In the example illustrated in FIG. 10, specifically, the signal (1) is connected to a terminal #0₀, that is, a zeroth terminal among m terminals corresponding to the transmission port #0, the signal (2) is connected to a terminal #0₁ (a first terminal corresponding to the transmission port #0), the signal (3) is connected to a terminal #0₂ (a second terminal corresponding to the transmission port #0), the signal (4) is connected to a terminal #0₃ (a third terminal corresponding to the transmission port #0), the signal (5) is connected to a terminal #1₀ (a zeroth terminal corresponding to the transmission port #1), the signal (6) is connected to a terminal #1₁ (a first terminal corresponding to the transmission port #1), the signal B is connected to a terminal #2₀ (a zeroth terminal corresponding to the transmission port #2), the signal C is connected to a terminal #1₂ (a second terminal corresponding to the transmission port #1), and the signal D is connected to a terminal #1₃ (a third terminal corresponding to the transmission port #1). These switch connections are controlled according to a command signal from the terrestrial control station 110. In this example, m is 4, that is, four terminals (the zeroth to third terminals) are associated with one transmission port, but m may not be 4.

Each of the multiplexing units (the multiplexing units 32-1 to 32-N) synthesizes the four input signals with arranging the signals side by side at frequency intervals of 0.25. Each multiplexing unit is designated such that the frequency versus phase characteristic of the signal obtained by multiplex is linear, similarly to the previously-mentioned demultiplexing units 30-1 to 30-N.

In the illustrated example, the multiplexing unit 32-1 multiplexes the signals (1), (2), (3) and (4) inputted from the digital switch matrix unit 31, and generates a signal (iii) illustrated in FIG. 10(b). The multiplexing unit 32-2 multiplexes the signals (5), (6), C and D, and generates a signal {(iv), C, D} having a frequency allocation illustrated in FIG. 10(c). The multiplexing unit 32-3 performs processing of multiplexing the signal B and three empty channels, and generates the signal B having a frequency allocation illustrated in FIG. 10(d).

Then, the multiplexed signal (iii) is transformed to a signal in a radio frequency band through the delay circuit 33-1, the DA converter 34-1, the LPF 35-1, the mixer 36-1 and the BPF 38-1. Similarly, the multiplexed signal {(iv), C, D} is transformed to a signal in a radio frequency band through the delay circuit 33-2, the DA converter 34-2, the LPF 35-2, the mixer 36-2, and the BPF 38-2, and the multiplexed signal B is transformed to a signal in a radio frequency band through the delay circuit 33-3, the DA converter 34-3, the LPF 35-3, the mixer 36-3, and the BPF 38-3.

In the present embodiment, for the sake of convenience of description, the example in which the number of multiplexed signals is four is described, but the number of multiplexed signals is not limited to this example, and the number of multiplexed signals may be an integer of 2 or more. The delay amounts τT0 to τT(n-1) of the delay circuits 33-1 to 33-N are controlled according to the command signal from the terrestrial control station 110. A setting of the delay amounts will be described later.

Conversion of the transmission signals to a radio frequency band is implemented by performing multiplication on transmission local signals generated by the transmission local generating unit 37 in the mixers 36-1 to 36-N. The transmission local signals generated by the transmission local generating unit 37 are generated based on the oscillation source 26, similarly to the reception local signals generated by the reception local generating unit 25 described above. Therefore, a frequency relation among the transmission local signals is stable, and frequency shift does not occur. A frequency interval of the transmission local signals is also set to 1, similarly to the frequency interval of the reception local signals.

The connection of the transmission analog switch matrix unit 39 is controlled according to a command signal from the terrestrial control station 110. In the illustrated example, the signal (iii) from the transmission port #0 (the BPF 38-1) and the signal {(iv), C, D} from the transmission port #1 (the BPF 38-2) are simultaneously outputted to the transmission antenna 40-1. A signal spectrum outputted from the transmission antenna 40-1 has the form in which the signal (iii) partially overlaps the signal (iv) as illustrated in FIG. 10(e). Here, since the frequency interval of the transmission local signals is 1 and a characteristic of each demultiplexing filter illustrated in FIG. 7, a synthetic signal A' obtained by combining the signal (iii) with the signal (iv) has the same signal spectrum form as the original signal A from the broadband transmitting station 101 as illustrated in FIG. 10(g), and is transmitted to the receiving station 401 in the beam area 400.

The transmission analog switch matrix unit 39 outputs the signal B (FIG. 10(f)) that has been outputted from the transmission port #2 (the BPF 38-3) and converted in the radio frequency band to the transmission antenna 40-2, and transmits the signal B to the receiving station 403 in the beam area 402.

The terrestrial receiving station 401 receives and the signals {A', C, D}, and then demodulates them, respectively. Further, the terrestrial receiving station 403 receives the signal B, and then demodulates it.

The receiving station 401 receives the broad band signal {A', C, D} of the total bandwidth of 2, but since an operation speed of a digital device of a consumer product used on the ground is generally several times as high as an operation speed of a space digital device, the receiving station 401 does not have a problem of a performance upper limit of a digital device and can demodulate the signal {A', C, D}.

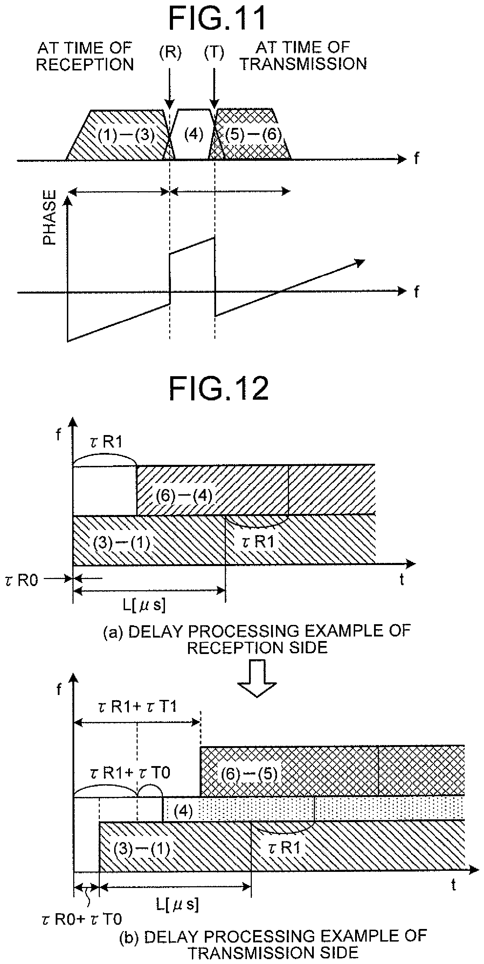

Here, in the frequency versus phase characteristic of the synthetic signal A', discontinuity occurs in two "↓" points {(R), (T)} illustrated in FIG. 11. The "↓" (R) illustrated in FIG. 11 represents a position of discontinuity occurring between the port #n and the port #n+1 (specifically, the reception port #0 and the reception port #1) at the reception side as described above, and the "↓" (T) illustrated in FIG. 11 similarly represents a position of discontinuity occurring between the port #n and the port #n+1 (specifically, the transmission port #0 and the transmission port #1) at the transmission side.

As described above, in the present embodiment, even when phase discontinuity occurs within a band of the synthetic signal A', the same reception sensitivity characteristic as that when the original signal A is received is implemented without deterioration of the communication quality by way of each delay control of the delay circuits 29-1 to 29-N and 33-1 to 33-N in the relay satellite 200 and the correlation process in the receiving station 401.

As one example, processing of the receiving station 401 when the signal A is the spread spectrum signal will be described with reference to FIGS. 4 to 14.

In the receiving station 401 having the configuration illustrated in FIG. 4, the antenna 500 receives the signal {A', C, D}, and the amplifier 501 amplifies a level of the signal {A', C, D}. The amplified signal {A', C, D} is transformed from the radio frequency band signal to an intermediate frequency signal or a base band signal through the band pass filter (BPF) 502, the mixer 503, and the low pass filter (LPF) 505, and then inputted to the AD converter 506. The AD converter 506 that is a consumer product samples and converts the signal {A', C, D} having the total bandwidth of 2 into a digital signal, and the demultiplexing unit 507 configured with a digital device of a consumer product demultiplexes the signal {A', C, D} having the total bandwidth of 2 outputted from the AD converter 506 into the signals A', C and D.

The narrowband signal demodulator 508 demodulates the signal C obtained by demultiplex of the demultiplexing unit 507, and the narrowband signal demodulator 509 demodulates the signal D obtained by demultiplex of the demultiplexing unit 507. As can be understood in the above-described process of each signal processing, since the signals C and D do not have the phase discontinuity occurring in the signal band as in the signal A', the narrowband signal demodulators 508 and 509 performs data demodulation in a generally-used modulation method.

Meanwhile, the broadband signal demodulator 510 performs data demodulation in conformity with the correlation process according to delay control performed by the relay satellite 200. The delay control is intended to reduce influence of phase uncertainty occurring between ports, and is performed to separate cross-correlation vectors of paths after back-diffusion in a time direction by giving a time delay difference for the paths of each port in order to prevent a phenomenon that the cross-correlation vectors negate each other at the time of reception and thus the communication quality deteriorates. The correlation vectors separated in the time direction are synthesized with vector angles being aligned with each other by the broadband signal demodulator 510, and thus the communication quality does not deteriorate. Next, the details of the demodulation process will be described.

First of all, the control station 110 sets the delay amounts (τR0, τR1, τT0 and τT1) of the delay circuits 29-1, 29-2, 33-1 and 33-2 in the relay satellite 200 to ones illustrated in FIG. 12, for example. The control station 110 manages the present satellite system, including control of whole the relay satellites 200, types of signals to be relayed, frequency allocations, and the like, and so the control station 110 also notifies the receiving station 401 of information useful to demodulate the signal A', such as delay values set for the relay satellite 200 or the phase discontinuity positions (R) and (T) of the signal A' as necessary.

FIG. 12(a) illustrates a delay process example on the signal A at the reception side of the relay satellite 200, and FIG. 12(b) illustrates a delay process example on the signal A at the transmission side of the relay satellite 200, wherein vertical axes represent frequency of the signal A, and horizontal axes represent time. As illustrated in FIG. 12, a value smaller than a spreading code length L [µsec] is set as each delay time.

At the reception side of the relay satellite 200, in the signal A (= {(1), (2), (3), (4), (5), (6)}) decomposed by each demultiplexing unit, the signals (1), (2) and (3) are given a time delay τR0 (0 [sec] in this example) in the delay circuit 29-1, and the signals (4), (5) and (6) are given a time delay τR1 in the delay circuit 29-2 (FIG. 12(a)).

Further, at the transmission side of the relay satellite 200, the signals (1), (2), (3) and (4) are given a time delay τT0 in the delay circuit 33-1, and the signals (5) and (6) are given a time delay τT1 in the delay circuit 33-2. Through this delay control, the relay satellite 200 finally gives a delay illustrated in FIG. 12(b) to the signal A.

After the delay setting is executed, the broadband signal demodulator 510 of the receiving station 401 starts a back-diffusion process in the cross-correlating unit 511. The cross-correlating unit 511 obtains a cross-correlation with the signal A' using an already-known back-diffusion code at a sampling period of several times as high as in a diffusion chip rate (performs sliding correlation).

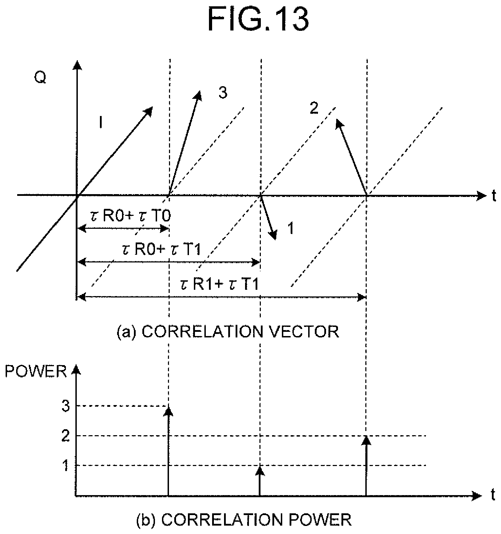

FIGS. 13(a) and 13(b) illustrate an example of cross-correlation characteristics. FIG. 13(a) illustrates a cross-correlation vector characteristic, and FIG. 13(b) illustrates a cross-correlation power characteristic. If cross-correlation power when any one of the signals {(1), (2), (3), (4), (5), (6)} is received is set to be 1, then as illustrated in FIG. 13, a cross-correlation vector (power energy: 3) based on the signals {(1), (2), (3)} is obtained after a time (τR0 + τT0), a cross-correlation vector (power energy: 1) based on the signal (4) is obtained after a time (τR0 + τT1), and a cross correlation vector (power energy: 2) based on the signals {(5), (6)} is obtained after a time (τR1 + τT1).

The vector phase detecting unit 512 detects the number of cross-correlation vectors illustrated in FIG. 13(a), an arrival time of each vector, and each vector phase angle from the cross-correlation data series (FIG. 13(a)) obtained by the cross-correlating unit 511, and notifies the synthesizing unit 513 of the obtained information. Further, in detecting an arrival time of a vector or a vector phase angle, the vector phase detecting unit 512 may use information such as the number of vectors (3, in this example) to be detected, an expectation value of a vector length ratio (3 : 1 : 2 in this example), or a time difference of vectors (τT1-τT0, τR1-τR0+τT1-τT0 in this example), from the delay amounts (τR0, τR1, τT0 and τT1) collected from the control station 110 or the phase discontinuity position information of the signal A'. In this case, compared to the case of detecting without using the above information, the number of vectors, the arrival time of the vector, and the vector phase angle can be more accurately detected.

The synthesizing unit 513 synthesizes the correlation vectors of the cross-correlation data series outputted from the cross-correlating unit 511 using the information such as the number of vectors, the arrival time of the vector, and the vector phase angle detected by the vector phase detecting unit 512, and outputs the synthesis result.

An operation example of the synthesizing unit 513 will be described with reference to FIG. 5. The cross-correlation data series is inputted to the delay units 600 and 601 and the adder 620. The delay unit 600 performs time delay control to match a vector of a first path that first comes with an arrival time of a third path. Specifically, the vector phase detecting unit 512 provides a delay amount (τR1-τR0+τT1-τT0) of a first path to the delay unit 600 based on the time difference information of the vector detected by the vector phase detecting unit 512. Similarly, the delay unit 601 performs time delay control to match a vector of a second path with the arrival time of the third path. Specifically, the vector phase detecting unit 512 provides a delay amount (τR1-τR0) of the second path to the delay unit 601 based on the time difference information of the vector detected by the vector phase detecting unit 512.

Through the delay control processes of the cross-correlation data series which is branched into three, the positions of the three correlation vectors illustrated in FIG. 13 can be all aligned with the vector position of the third path. Here, in circumstances where the correlation vector phase angles do not remain aligned, the vector phase angles are also aligned by the following process.

The phase shifter 610 causes the vector phase angle of the first path that first comes to match the vector phase angle of the third path. Specifically, the vector phase detecting unit 512 provides a phase shift amount of the first path to the phase shifter 610 based on the vector phase angle information detected by the vector phase detecting unit 512. Similarly, the phase shifter 611 causes the vector phase angle of the second path to match the vector phase angle of the third path. Specifically, the vector phase detecting unit 512 provides a phase shift amount of the second path to the phase shifter 611.

By performing the vector phase shift control, the vector phase angles of the cross-correlation data series which is branched into three can be all aligned with the vector position of the third path.

The adder 620 adds the three cross-correlation data series that have been subjected to the time delay control and the phase shift control, and the latch 630 extracts a correlation peak value after vector synthesis from the after-addition cross-correlation data series based on the arrival time of the vector detected by the vector phase detecting unit 512.

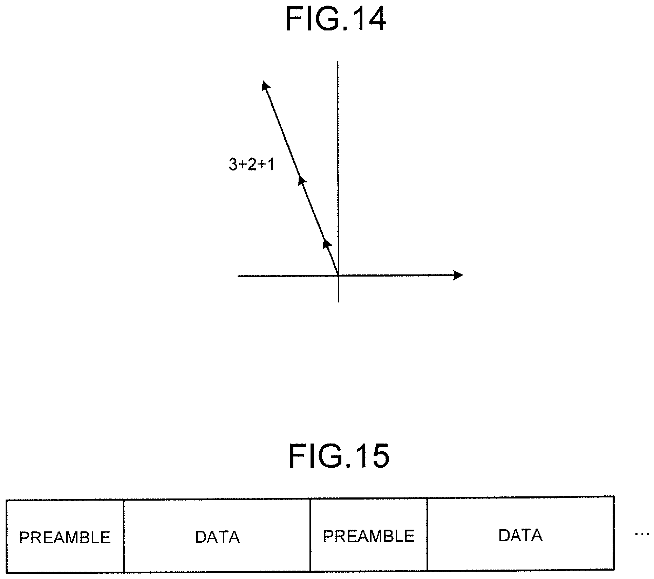

Through the above process, the synthesized signal vector outputted from the synthesizing unit 513 is aligned as illustrated in FIG. 14, so that a signal having power energy of 6 can be obtained without reducing a signal level.

The detecting unit 514 at the subsequent stage receives the synthesized signal vector outputted from the synthesizing unit 513 in the diffusion code period (L [µsec]), and performs synchronous detection or delay detection, to demodulate the data.

Through the delay control in the relay satellite 200 and the signal processes in the receiving station 401, when the broadband signal is relayed by the relay satellite 200, even though discontinuity occurs in the frequency versus phase characteristic, the cross-correlation vectors of the respective paths after back-diffusion are separated in the time direction so as to prevent the cross-correlation vectors from negating each other at the time of reception to deteriorate the communication quality, and thus the satisfactory communication quality can be achieved when the cross-correlation vectors are synthesized.

As described above, in the present embodiment, the relay satellite includes a plurality of processing blocks (a reception processing unit configured with a set of {the BPF, the mixer, the LPF, the A/D, the delay circuit, the demultiplexing unit} illustrated in FIG. 2) for receiving a signal from a transmitting station and a plurality of processing blocks (a transmission processing unit configured with a set of {the multiplexing unit, the delay circuit, the D/A, the LPF, the mixer, the BPF} illustrated in FIG. 3) for transmitting a signal to a receiving station, and when a broadband signal exceeding a performance limit of devices constituting its own satellite is transmitted thereto, N (N ≥ 2) reception processing blocks are used, and the N reception processing blocks perform the reception processes of the input broadband signal in parallel with different frequency components being targeted, and the signals received by use of the N reception processing blocks are transmitted to a receiving station using a plurality of transmission processing blocks. At this time, in each processing block (the reception processing block and the transmission processing block), a delay of a different delay amount is given for each processing block so that the signal components can be synthesized without deteriorating the communication quality at the receiving station side. Thus, as illustrated in FIG. 6, a signal including the broadband signal exceeding the performance limit (the bandwidth of 1) of the space device can be relayed, and a flexible relay operation can be implemented.

Further, the digital switch matrix unit that relays the signal between the reception processing block and the transmission processing block assigns a plurality of signals (signals demultiplexed in the reception blocks at the previous stage) that are related to the same receiving station that is the transmission destination (the relay destination) regardless of the signal type (regardless of whether or not a signal is a broadband signal or a non-broadband signal) in such an assignment manner that a total band can fall within a band that can be processed by each transmission processing block at the subsequent stage, and thereby the band can be efficiently used.

Further, through the configuration described in the present embodiment, even if normal processing can not be realized in the situation where failure occurs in either the path of the reception port #0 or the path of the reception port #1, or an input of the reception port #0 or the reception port #1 is saturated due to unexpected interference wave input or the like, a broadband signal can be relayed using another normal path with sensitivity deterioration of a low level about 3 dB without disconnection of communication. For example, when failure occurs in the reception port #1, since half (the signals (4), (5) and (6)) of the broadband signal A is lost, the second correlation vector (power 1) and the third correlation vector (power 2) among the correlation vectors illustrated in FIG. 13 disappear. However, since the first correlation vector (power 3) obtained through the reception port #0 can be received, a reception characteristic has a deterioration range of 3 dB (half), and for example, communication can be established by adaptive modulation control by which a transmission data rate is reduced to 0.5 times.

Meanwhile, in the related art in which a broadband signal is processed by a set of {the A/D, the D/A, the digital demultiplexing/multiplexing}, if any part of the components is broken, then communication is impossible. To this end, by adopting the configuration (see FIGS. 2 and 3) according to the present embodiment, it is possible to implement a relay satellite and a satellite communication system, which are more robust over failure or interference than the related art in which a broadband signal is processed by a set of {the A/D, the D/A, the digital demultiplexing/multiplexing}.

In addition, there is some possibility that the communication quality deteriorates, but the purpose of simplification of the relay satellite 200 and the satellite communication system, the delay control in the relay satellite 200 may not be performed. In other words, the relay satellite 200 may be configured not to include the delay circuits 29-1 to 29-N and 33-1 to 33-N. In this case, since the delay difference between the paths in the relay satellite 200 is less than one chip, the communication quality may deteriorate due to the negation between the cross-correlation vector phase angles of the paths. However, since the delay control for the relay satellite 200 is unnecessary, the configurations of the relay satellite 200 and the satellite communication system can be simplified.

### Second embodiment

The first embodiment has been described with the example of the signal processing when the signal A is a spread spectrum signal, but the signal A may be, for example, a broadband PSK modulation signal on which spectrum spreading is not performed, instead of the spread spectrum signal. In this case, the broadband transmitting station 101 transmits a broadband PSK modulation signal to which a preamble for transmission path equalization is added, as illustrated in FIG. 15. The relay satellite 200 relays the broadband signal A through the same processing as in the first embodiment.

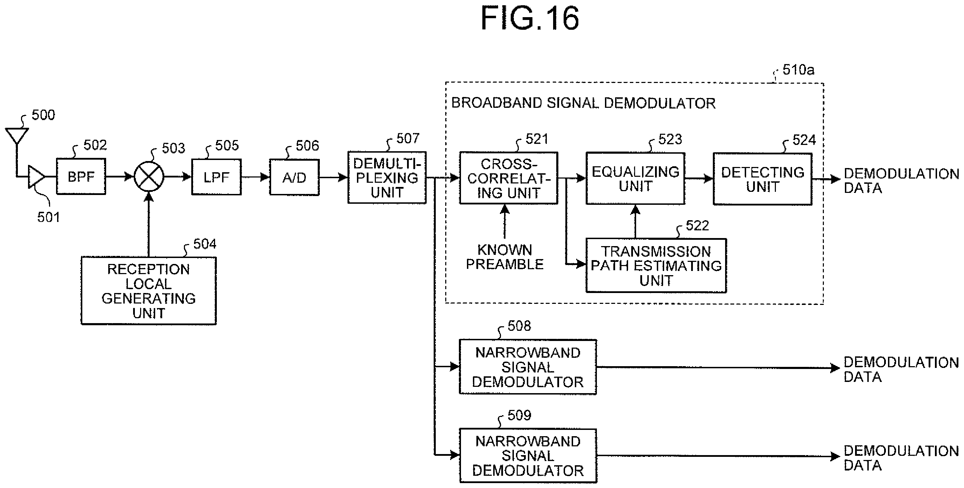

FIG. 16 is a diagram illustrating a configuration example of a receiving station 401 (a broadband PSK receiving station) according to a second embodiment.

Referring to FIG. 16, the receiving station 401 includes an antenna 500, an amplifier 501, a band pass filter 502, a mixer 503, a reception local generating unit 504, a low pass filter 505, an AD converter (A/D) 506, a demultiplexing unit 507, a broadband signal demodulator 510a, and narrowband signal demodulators 508 and 509. The broadband signal demodulator 510a includes a cross-correlating unit 521, a transmission path estimating unit 522, an equalizing unit 523, and a wave detecting unit 524. In other words, the receiving station 401 according to the present embodiment includes the same configuration as the receiving station 401 (see FIG. 4) described in the first embodiment except that the broadband signal demodulator 510a is used instead of the broadband signal demodulator 510. Thus, the present embodiment will be described in connection with an operation of the broadband signal demodulator 510a.

In the broadband signal demodulator 510a, the cross-correlating unit 521 performs a cross-correlation process of a reception signal A and a known preamble using the same preamble (see FIG. 15) added to the broadband PSK modulation signal. Then, the transmission path estimating unit 522 extracts a cross-correlation characteristic of a preamble included in the reception signal A and the known preamble from the cross-correlation data series obtained by the cross-correlation process performed by the cross-correlating unit 521 through cross-correlation power detection, and stores the extracted cross-correlation characteristic as a transmission path estimation value.

The equalizing unit 523 performs an equalizing process of the reception signal A using the transmission path estimation value. For example, the transmission path estimation value and the reception signal A are transformed from the time domain to the frequency domain, and then the equalizing process in the frequency domain is performed such that the reception signal A transformed to the frequency domain is divided by the transmission path estimation value transformed to the frequency domain. Through the equalizing process, even if the frequency versus phase characteristic in a band of the signal A has, for example, the discontinuity illustrated in FIG. 11, the transmission path estimation value also has a similar discontinuity characteristic, and thereby the phase discontinuity can be corrected by the division process. After the division, the data series is transformed from the frequency domain to the time domain in the equalizing unit 523 in turn, and then outputted to the detecting unit 524.

The detecting unit 524 preferably demodulates the signal A (the broadband PSK modulation signal) through the general demodulation process since the phase discontinuity in the signal A band is solved through the equalizing process by the equalizing unit 523.

As described above, in the satellite communication system including the relay satellite 200, the broadband PSK modulation signal on which spectrum spreading is not performed, not only the spread spectrum signal described in the first embodiment, can also be relayed with the satisfactory communication quality.

In addition, there is some possibility that the communication quality deteriorates, but also in the present embodiment, for the purpose of simplification of the relay satellite 200 and the satellite communication system, the delay control in the relay satellite 200 may not be performed. In other words, the relay satellite 200 may be configured not to include the delay circuits 29-1 to 29-N and 33-1 to 33-N.

### Third embodiment

The relay satellite 200 according to the first embodiment has been described in connection with the example in which the reception analog switch matrix unit 22 performs connection control to connect the signals from the reception antennas 21-1 to 21-N to the reception ports. However, when the configuration of the relay satellite 200 is modified as in the following (1) and (2), the reception analog switch matrix unit 22 may be eliminated, and thus the configuration of the relay satellite 200 may be simplified.
(1) Directivity of each of the reception antennas 21-1 to 21-N is set variable according to a command from the control station 110.
(2) The same number of reception antennas are secured as the number of reception ports, and each reception antenna is directly connected with each reception port in a one-to-one manner. For example, in FIG. 2, the reception antenna 21-n is directly connected with the reception port #n-1 (n=1, 2, ..., N).

In this case, in the relay satellite 200, not only the reception antenna 21-1 but also the reception antenna 21-2 is controlled to be directed to the broadband beam area 100, and therefore the broadband signal A can be processed through the reception port #0 and the reception port #1, similarly to the first embodiment. The reception antenna 21-3 is controlled to be directed to the narrowband beam area 102, and therefore the signals B, C and D received by the reception antenna 21-3 can be processed through the reception port #2, similarly to the first embodiment.

Similarly, the first embodiment has been described in connection with the example in which the transmission analog switch matrix unit 39 performs connection control to connect the signals from the transmission ports to the transmission antennas 40-1 to 40-N. However, by adopting the following (3) and (4), the transmission analog switch matrix unit 39 may be eliminated to simplify the configuration of the relay satellite 200.
(3) Directivity of each of the transmission antennas 40-1 to 40-N is set variable according to a command from the control station 110.
(4) The same number of transmission antennas are secured as the number of transmission ports, and each transmission antenna is directly connected with each transmission port in a one-to-one manner. For example, in FIG. 3, the transmission antenna 40-n is directly connected with the transmission port #n-1 (n=1, 2, ..., N).

In this case, in the relay satellite 200, not only the transmission antenna 40-1 but also the transmission antenna 40-2 is controlled to be directed to the beam area 400, and therefore the signals outputted from the transmission port #0 (the BPF 38-1) and the transmission port #1 (the BPF 38-2), that is, the broadband signal {A', C, D} can be transmitted to the terrestrial receiving station 401, similarly to the first embodiment.

The transmission antenna 41-3 is controlled to be directed to the beam area 402, and therefore the signal B outputted from the transmission port #2 (the BPF 38-3) can be transmitted to the terrestrial receiving station 403.

### Fourth embodiment

In the first to third embodiments, the phase discontinuity occurring in the relay satellite 200 is compensated by the terrestrial receiving station 401, but in the present embodiment, the relay satellite 200 itself compensates phase discontinuity occurring at the reception side through digital signal processing. As will be described in detail later, according to the present embodiment in which the phase discontinuity is compensated in the relay satellite 200, a phase discontinuity point can be reduced from two points (R and T) illustrated in FIG. 11 to a single point (T). Further, in the present embodiment, since the phase discontinuity occurring at the reception side of the relay satellite is solved, it is possible to obtain an effect by which complexity of processing of the terrestrial receiving station 401 is reduced and an effect by which an uplink frequency use efficiency is improved and the capacity of the existing transmitting and receiving stations is improved. Hereinafter, the details will be described.

A transmission side configuration of the relay satellite 200 according to the present embodiment is similar to that illustrated in FIG. 3 according to the first embodiment. Meanwhile, the reception side is configured such that the delay circuits 29-1 to 29-N are excluded from the configuration illustrated in FIG. 2 according to the first embodiment. In other words, in the present embodiment, in FIG. 2, the outputs of the AD converters 28-1 to 28-N are connected to the demultiplexing units 30-1 to 30-N. Further, in the present embodiment, new processing that is not performed in the first embodiment is executed inside the digital switch matrix unit 31. The details of this processing will be described later.

Meanwhile, when the spread spectrum signal is received, the terrestrial receiving station 401 according to the present embodiment is configured such that the synthesizing unit illustrated in FIG. 5 does not include the delay unit 601 and the phase shifter 611 since there is no second path. Except for this matter, the receiving station 401 according to the present embodiment does not differ in configuration from the receiving station 401 according to the first or second embodiment. Hereinbelow, an operation of the satellite communication system according to the present embodiment will be described. The description will proceed with an operation example in which a signal from the broadband transmitting station 101 and signals from the narrowband transmitting stations 103, 104 and 105 are received, and transmitted to the receiving stations 401 and 403, similarly to the first embodiment.

In the present embodiment, a series of processes until signals of the transmitting stations 101, 103, 104 and 105 are demultiplexed by the demultiplexing units 30-1 to 30-N of the relay satellite 200 (the reception side) is similar to the first embodiment except that the delay circuits are deleted and so the signals are not delayed. In other words, the signals (1), (2) and (3) from the reception port #0, the signals (4), (5) and (6) from the reception port #1, and the signals B, C and D from the reception port #2 are inputted to the digital switch matrix unit 31 according to the present embodiment.

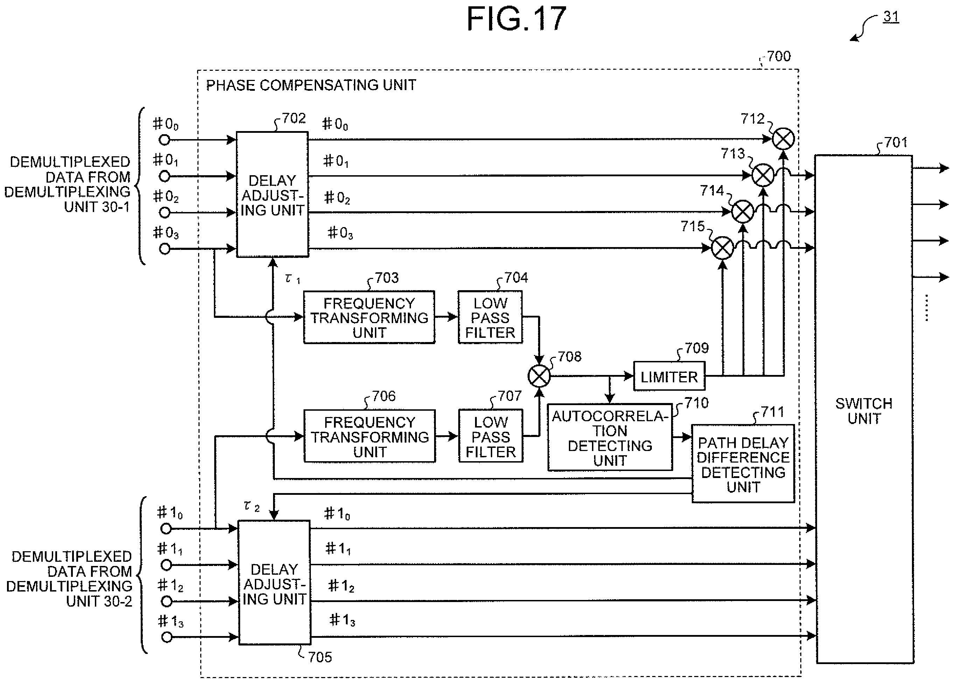

FIG. 17 illustrates a configurational example of the digital switch matrix unit 31 according to the present embodiment. The digital switch matrix unit 31 according to the present embodiment includes a phase compensating unit 700 and a switch unit 701 as illustrated in FIG. 17. The phase compensating unit 700 includes delay adjusting units 702 and 705, frequency transforming units 703 and 706, low pass filters 704 and 707, a complex multiplier 708, a limiter 709, an autocorrelation detecting unit 710, a path delay difference detecting unit 711, and complex multipliers 712, 713, 714 and 715.

Here, in the receiving unit (see FIG. 2), the signal (1) outputted from the demultiplexing unit 30-1 that deals with the input signal from the reception port #0 is inputted to a terminal #0₁ illustrated in FIG. 17. Similarly, the signal (2) outputted from the demultiplexing unit 30-1 is inputted to a terminal #0₂, and the signal (3) is inputted to a terminal #0₃.

Further the signal (4) outputted from the demultiplexing unit 30-2 that deals with the input signal from the reception port #1 is inputted to a terminal #1₀ illustrated in FIG. 17. Similarly, the signal (5) outputted from the demultiplexing unit 30-2 is inputted to a terminal #1₁, and the signal (6) is inputted to a terminal #1₂.

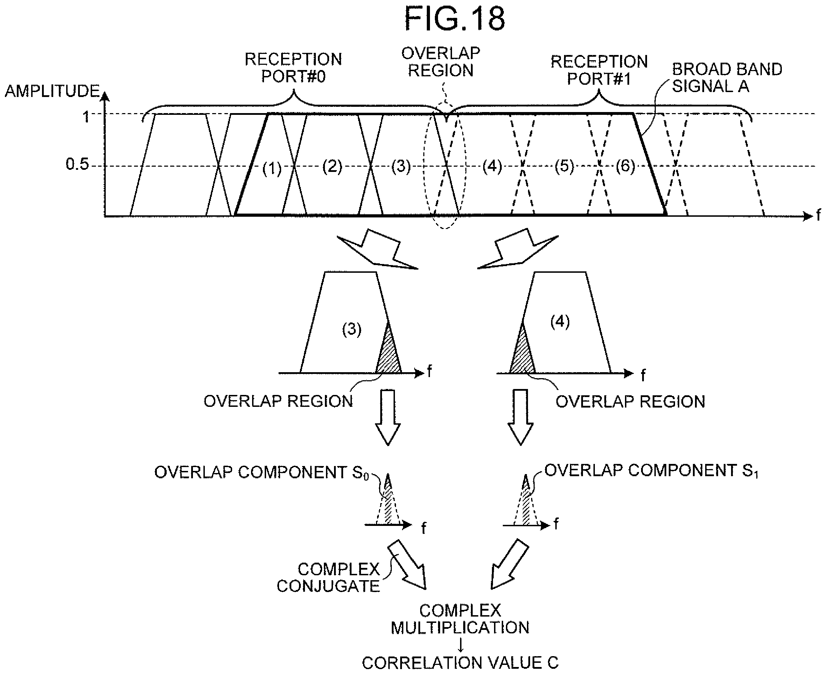

Next, an operation of the digital switch matrix unit 31 according to the present embodiment will be described with reference to FIGS. 17 and 18. FIG. 18 is a chart illustrating an example of processing of the phase compensating unit 700 disposed in the digital switch matrix unit 31 according to the present embodiment.

The phase compensating unit 700 compensates phase discontinuity between the signal {(1), (2), (3)} outputted from the demultiplexing unit 30-1 of the receiving unit and the signal {(4), (5), (6)} outputted from the demultiplexing unit 30-2. The switch unit 701 receives the signal {(1), (2), (3)} and the signal {(4), (5), (6)} compensated by the phase compensating unit 700, and performs the switch process illustrated in FIG. 10 together with the signals {B, C, D} that are signals not to be compensated, similarly to the first embodiment.

Next, an operation of the phase compensating unit 700 will be described. As illustrated in FIG. 18, it is noted that a half of the broadband signal A passes through the reception port #0, and another half passes through the reception port #1, but only a partially overlapping signal component passes through both of the ports. Specifically, a common signal component that is in an overlap region illustrated in FIG. 18 is included in a part (a hatched portion) of the signal (3) outputted from the demultiplexing unit 30-1 and a part (a hatched portion) of the signal (4) outputted from the demultiplexing unit 30-2 as illustrated in FIG. 18.

The overlap component included in the part of the signal (3) is transformed into the base band (0Hz) by the frequency transforming unit 703 illustrated in FIG. 17, and then extracted through the low pass filter 704. Similarly, the overlap component included in the part of the signal (4) is transformed into the base band (0Hz) by the frequency transforming unit 706, and then extracted through the low pass filter 707. Further, the signal (3) and the signal (4) are delay-adjusted by the delay adjusting units 702 and 705 at the previous stage and then inputted to the frequency transforming units 703 and 706, respectively, and the delay adjustment operation will be described later.

In FIG. 18, the overlap component extracted by the low pass filter 704 is denoted by S₀, and the overlap component extracted by the low pass filter 707 is denoted by S₁.

When there is neither phase discontinuity nor path delay difference between the reception port #0 and the reception port #1, the signal components {S₀, S₁} have identical signal vectors at sample points in the time direction, that is, the signal components {S₀, S₁} have the same waveform.

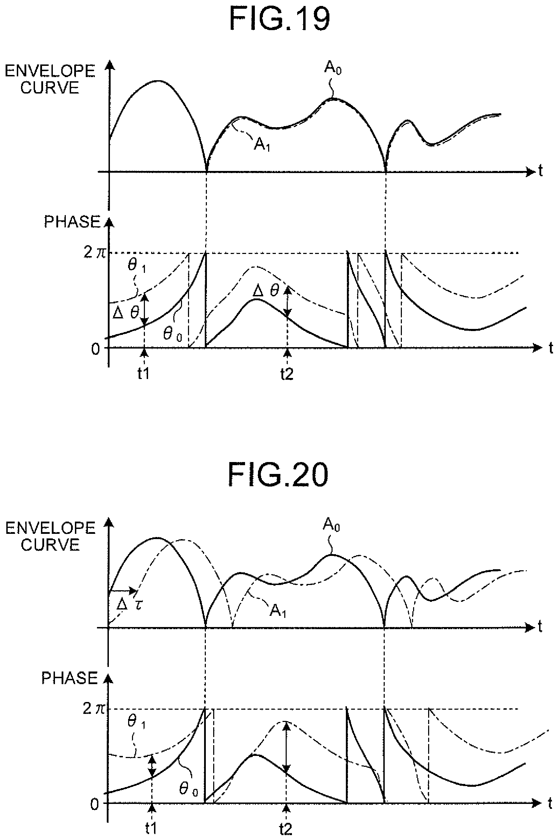

On the other hand, when a phase difference Δθ occurs between ports due to phase discontinuity, vector angles of the two signals are deviated from each other by Δθ. FIG. 19 illustrates envelope curves and phases of the signal components {S₀, S₁} when the phase difference Δθ occurs. FIG. 19 is a graph illustrating an example of a relation of the same components (the overlap components extracted by the low pass filters 704 and 707) of the reception signals inputted to the two different reception ports (the reception ports #0 and #1). In FIG. 19, A₀ represents an envelope curve signal of the overlap component S₀, θ₀ represents a phase signal of the overlap component S₀, A₁ represents an envelope curve signal of the overlap component S₁, and θ₁ represents a phase signal of the overlap component S₁. As illustrated in FIG. 19, when the phase difference Δθ occurs, the envelope curve signals {A₀, A₁} are identical to each other, but the phase signals {θ₀, θ₁} have a relation such that the phase signals are deviated from each other by Δθ at any time such as times t1 and t2 in FIG. 19.

Further, when the path delay difference Δτ occurs between the reception port #0 and the reception port #1 due to a temperature change, a temporal change, or the like, time waveforms of the two signals {S₀, S₁} are deviated from each other by Δτ. FIG. 20 illustrates the envelope curve signals {A₀, A₁} and the phase signals {θ₀, θ₁} of the signal {S₀, S₁} when the path delay difference Δτ occurs. As illustrated in FIG. 20, when the path delay difference Δτ occurs, the envelope curve signal A₁ is inputted with a delay of Δτ relative to the envelope curve signal A₀.

As can be understood from FIG. 20, when the path delay difference Δτ occurs, the phase difference of the phase signals {θ₀, θ₁} is not constant and varies. For example, a phase difference momentarily changes at times t1, t2 or the like illustrated in FIG. 20.

In this regard, in the satellite communication system according to the present embodiment, the phase compensating unit 700 compensates the phase discontinuity and the path delay difference that exist between the signal inputted to the reception port #0 and the reception signal inputted to the reception port #1, using the above-mentioned behavior. Next, the compensating operation will be described.

The complex multiplier 708 complex-multiplies the signal S₀ by the complex conjugate value of the signal S₁. Here, a vector angle δ of the complex-multiplied signal (that corresponds to a correlation value C illustrated in FIG. 18) outputted from the complex multiplier 708 becomes a phase difference (δ=θ₀-θ₁) of the phase signals {θ₀, θ₁}. Further, when the path delay difference Δτ is zero (0), the vector angle δ corresponds to the phase difference Δθ between the reception port #0 and the reception port #1.

The autocorrelation detecting unit 710 vector-synthesizes all the complex-multiplied signals outputted from the complex multiplier 708 during a certain period of time, and outputs the synthesized vector length as autocorrelation power Pᵢ (i=0, ±1, ±2, ...).

Next, an operation of the path delay difference detecting unit 711 will be described.

The autocorrelation power Pᵢ represents a maximum value when the path delay difference Δτ is zero (0). Meanwhile, as Δτ increases, the phase difference (= the vector angle δ) of the phase signals {θ₀, θ₁} does not become constant but becomes turbulent, and thereby the autocorrelation power P decreases. The path delay difference detecting unit 711 obtains the path delay difference Δτ using this behavior.

As the path delay difference detecting unit 711 first outputs an instruction signal for adjusting a delay amount to the delay adjusting units 702 and 705 at the previous stage, so as to intentionally give a delay difference between the paths in units of times Tc, and calculates the path delay difference Δτ from the autocorrelation power Pᵢ (i=0, ±1, ±2, ...) information in the case of giving each delay difference.

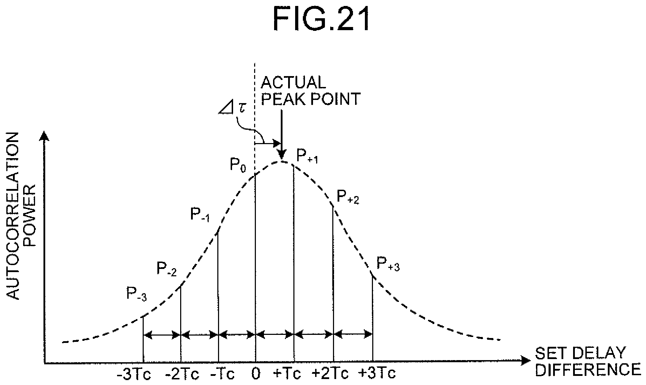

FIG. 21 illustrates an operation example of the path delay difference detecting unit 711. As illustrated in FIG. 21, at the time of setting "+Tc" at which a delay difference setting is closest to an actual path delay difference Δτ, the autocorrelation power is highest (P₊₁ in FIG. 21). Further, it can be understood that delay difference setting by which the autocorrelation power is second highest is "0" (P₀ in FIG. 21), and the actual path delay difference Δτ exists as a peak value between "0" and "+Tc."

The path delay difference detecting unit 711 obtains the position (=Δτ) of the autocorrelation power peak value using an autocorrelation power Pᵢ (i=0, ±1, ±2, ...) series. For example, the path delay difference detecting unit 711 obtains the position (=Δτ) of the peak value by a quadratic curve approximation process using three autocorrelation power values including a maximum value among the autocorrelation power Pᵢ (i=0, ±1, ±2, ...) series and power values before and after the maximum value. In the example of FIG. 21, the path delay difference detecting unit 711 obtains the position (=Δτ) of the peak value by a quadratic curve approximation process using three points of P₀, P₊₁ and P₊₂. In order to increase the calculation accuracy of Δτ, the path delay difference detecting unit 711 may increase the number of used points of the autocorrelation powers Pᵢ (i=0, ±1, ±2, ...) to five points, seven points and so on, instead of three points, and then obtain the position (=Δτ) of the peak value by an interpolation process such as a quadratic curve approximation.

After detecting the position (=Δτ) of the peak value, the path delay difference detecting unit 711 outputs delay adjustment signals τ₁ and τ₂ for correcting the path delay difference Δτ to 0 to the delay adjusting units 702 and 705 at the previous stage. The delay adjusting units 702 and 705 are configured with a polyphase filter, for example, and performs a fine sampling phase adjustment on input data based on the delay adjustment signals {τ₁, τ₂} from the path delay difference detecting unit 711. Specifically, the delay adjusting unit 702 gives a common delay τ₁ to each demultiplexing data piece from the demultiplexing unit 30-1, and then outputs the resultant data. Similarly, the delay adjusting unit 705 gives a common delay τ₂ to each demultiplexing data piece from the demultiplexing unit 30-2, and then outputs the resultant data.

In a "detection mode" before the position (=Δτ) of the peak value is detected, the path delay difference detecting unit 711 gives a path delay difference in {... , -2Tc, -Tc, 0, +Tc, +2Tc, ...} in order to obtain the autocorrelation power Pᵢ (i=0, ±1, ±2, ...) series. In the case of giving the delay differences {0, +Tc, +2Tc, ...} in the positive direction, the path delay difference detecting unit 711 gives the delay adjustment signal τ₁ to the delay adjusting unit 702 in {0, Tc, 2Tc, ...} while having the delay adjustment signal τ₂ for the delay adjusting unit 705 fixed to {0}. Similarly, in the case of giving the delay differences {0, -Tc, -2Tc, ...} in the negative direction, the path delay difference detecting unit 711 gives the delay adjustment signal τ₂ to the delay adjusting unit 705 in {0, Tc, 2Tc, ...} while having the delay adjustment signal τ₁ for the delay adjusting unit 702 fixed to {0}.

Next, in a "correction mode" after the position (=Δτ) of the peak value is detected, the path delay difference detecting unit 711 performs the following control on the delay adjusting units 702 and 705.

When Δτ is positive, the path delay difference detecting unit 711 negates the path difference in the positive direction by giving the delay adjustment signal τ₂ to the delay adjusting unit 705 in {Δτ} while having the delay adjustment signal τ1 for the delay adjusting unit 702 set to {0}. On the other hand, when Δτ is negative, the path delay difference detecting unit 711 negates the path difference in the negative direction by giving the delay adjustment signal τ₁ to the delay adjusting unit 702 in {Δτ} while having the delay adjustment signal τ₂ for the delay adjusting unit 705 set to {0}. As described above, through the two-step processing flow of the "detection mode" and the "correction mode", the path delay difference detecting unit 711 corrects the path difference.

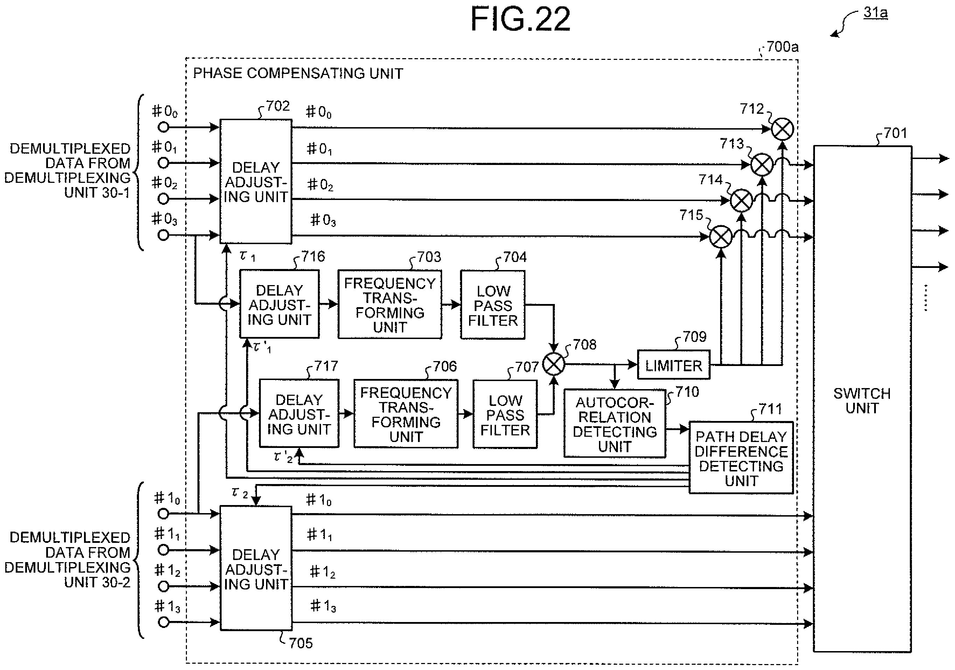

Further, when an operation of switching between the two modes is performed as described above, it is necessary to suspend the signal relay in the "detection mode," but when the path delay difference is to be corrected momentarily without suspending the signal relay, such correction can be realized by modification to a configuration illustrated in FIG. 22.

A phase compensating unit 700a of a digital switch matrix unit 31a illustrated in FIG. 22 has a configuration such that dedicated delay adjusting units 716 and 717 each intended to detect a path difference are added to the phase compensating unit 700 illustrated in FIG. 17. The delay adjusting units 716 and 717 are used for Δτ detection, and the delay adjusting units 702 and 705 are used for delay adjustment of each demultiplexing data piece.

In the phase compensating unit 700a, the delay adjusting unit 716 delays the signal (3) inputted from the terminal #0₃ according to the delay adjustment signal τ'₁ from the path delay difference detecting unit 711. Similarly, the delay adjusting unit 717 delays the signal (4) inputted from the terminal #1₀ according to the delay adjustment signal τ'₂ from the path delay difference detecting unit 711.

The path delay difference detecting unit 711 performs control for giving the path delay difference in {... , -2Tc, -Tc, 0, +Tc, +2Tc, ...} on the delay adjusting units 716 and 717, and calculates the position (=Δτ) of the peak value in the same method as in the path delay difference detecting unit 711 of the phase compensating unit 700 illustrated in FIG. 17. When the position calculation ends, delay control to negate the path difference is performed on the delay adjusting units 702 and 705 based on information of the calculated position (=Δτ) of the peak value.

Also thereafter, the path delay difference detecting unit 711 periodically controls the delay adjusting units 716 and 717 to calculate the position (=Δτ) of the peak value, and repeatedly performs the delay control to negate the path difference on the delay adjusting units 702 and 705 based on the calculated Δτ information. As a result, it is possible to realize an operation following change in the position (=Δτ) of the peak value caused by temperature change, temporal change, or the like.

As described above, by adding the delay adjusting units 716 and 717, and separating the delay adjustment function for calculating the position (=Δτ) of the peak value and the delay adjustment function for negating the path difference, the path delay difference can be corrected momentarily without suspending the signal relay.

Further, in the configuration example of FIG. 22, the delay adjusting units 702 and 705 are disposed inside the phase compensating unit 700a, but may be moved to the stage prior to the ports. For example, the delay adjusting units 702 and 705 may be moved to the stage prior to the demultiplexing units 30-1 and 30-2 in the receiving unit (see FIG. 2). When the delay adjustment is performed at the stage prior to the demultiplexing units 30-1 and 30-2, since the delay adjustment only has to be performed on one signal before demultiplex for each port, there is an advantage that the circuit size and the computation amount become small compared to the case in which the delay adjustment is performed on several signals after demultiplex. In this case, the position (=Δτ) of the peak value obtained by controlling the delay adjusting units 716 and 717 in the phase compensating unit 700a is just Δτ at the time of initial control step, but in second and subsequent control steps, only a time variation α from Δτ is observed. In other words, when there is no time variation, 0 (zero) is obtained constantly as the position (=Δτ) of the peak value of the second or subsequent round obtained by the path delay difference detecting unit 711. On the other hand, when the position of the peak value changes from Δτ to Δτ+α, since Δτ is negated at the time of initial control step, only the change amount α is detected by the path delay difference detecting unit 711.

Thus, the delay adjusting units 702 and 705 are moved to the previous stage, the path delay difference detecting unit 711 performs control to negate (Δτ+α) on the delay adjusting units 702 and 705 based on the initial control value Δτ and the newly detected variation α.

The process of correcting the path delay difference has been described above, but correction of the path delay difference may be omitted under the condition in which the path delay difference hardly occurs or under the condition in which the quality of a signal to be relayed is not adversely affected even when some path delay difference occurs.

Next, a phase compensating process will be described.

As described above, the vector angle δ of the signal outputted from the complex multiplier 708 becomes the phase difference of the phase signals {θ₀, θ₁}, and corresponds to the phase difference Δθ between the reception port #0 and the reception port #1 when the path delay difference Δτ is zero (0). Thus, after correcting the path delay difference, the phase compensating unit 700 compensates the vector phase difference using the output of the complex multiplier 708.

First, the limiter 709 converts the length of the signal vector outputted from the complex multiplier 708 to a certain value. In other words, the limiter 709 limits the amplitude of the signal vector inputted from the complex multiplier 708 onto a unit circle to remove amplitude information included in the input signal and pass only phase information therethrough.

Next, the complex multipliers 712, 713, 714 and 715 complex-multiply a conjugate value of a complex signal outputted from the limiter 709 by the signals (the signals having been corrected in a path delay difference) that have been demultiplexed by the demultiplexing unit 30-1 and delay-adjusted by the delay adjusting unit 702. Through this multiplying process, the signal vector phases of the signals {(1), (2), (3)} demultiplexed by the demultiplexing unit 30-1 are corrected by -Δθ, and thus phase discontinuity of the signals {(4), (5), (6)} demultiplexed by the demultiplexing unit 30-2 and the signals {(1), (2), (3)} having been corrected by -Δθ is solved.

The subsequent process of the relay satellite 200 is similar to that in the first embodiment, and the signals {A, C, D} is transmitted to the receiving station 401, and the signal B is transmitted to the receiving station 403.

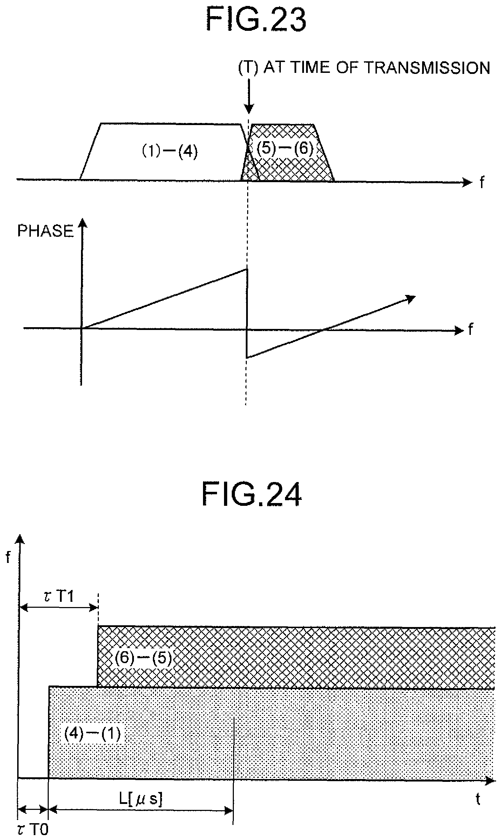

Through the phase compensating process in the phase compensating unit 700, of the two phase discontinuity points (R) and (T) illustrated in FIG. 11, (R) occurring at the time of reception disappears, and thus one phase discontinuity point, that is, (T) occurs at the time of transmission as illustrated in FIG. 23.

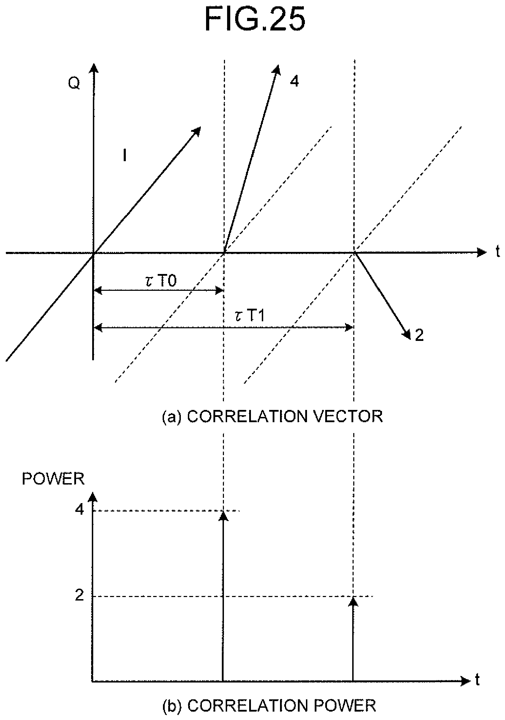

In the present embodiment, since the delay circuits 29-1 to 29-N of the receiving unit disposed in the relay satellite 200 are removed, the time delay difference is provided between the signals (1) to (4) outputted from the transmission port #0 and the signals (5) and (6) outputted from the transmission port #1 at the time of transmission as illustrated in FIG. 24. Thus, the terrestrial receiving station 401 only has to synthesize correlation vectors of two waves as illustrated in FIG. 25 and thus can reduce the processing amount compared to the case in which three waves are synthesized as in the first embodiment.

Further, the present embodiment has been described in connection with the example in which the upper limit of the signal bandwidth that can be processed by a set of {the AD converter, the demultiplexing unit, the multiplexing unit, the DA converter} in the relay satellite 200 is set to 1, and in responding to this, the bandwidth of the broadband signal A is set to 1.5, similarly to the first embodiment. Here, for example, when the bandwidth of the broadband signal A is set to 1.0 and the signal A is demultiplexed into the signals {(1),(2),(3),(4)} illustrated in FIG. 7, in the relay satellite (see FIG. 2) according to the first embodiment, the phase discontinuity occurs between the signal (3) and the signal (4) at the time of reception as described above in the first embodiment, but in the relay satellite 200 according to the present embodiment, any phase discontinuity does not occur by virtue of the compensating process performed by the phase compensating units 700 and 700a. Further, the signals (5) and (6) are not synthesized even on the transmission side (the transmitting unit illustrated in FIG. 3), so that the phase discontinuity does not occur. Thus, in this case, even the existing terrestrial receiving station that does not perform any special signal processing can demodulate the broadband signal A. In other words, when switching control for avoiding any phase discontinuity point occurring at the transmission side is performed, each signal of the reception side of the relay satellite 200, that is, each uplink signal thereof may be arranged at any position of the total bandwidth of 2.0 processed by the port #0 and the port #1, and an effect by which the uplink frequency use efficiency is improved and the capacity of the existing transmitting and receiving stations is increased is obtained.

As described above, in the present embodiment, since the relay satellite 200 itself compensates the phase discontinuity occurred at the reception side of the relay satellite through the digital signal processing, it is possible to achieve an advantageous effect by which the complexity of processing in the terrestrial receiving station 401 is reduced and the computation amount can be reduced and an advantageous effect by which the capacity of the existing system is increased. The present embodiment has been described in connection with the phase compensation between the port #0 and the port #1, but the phase discontinuities between other ports such as between the port #1 and the port #2, between the port #2 and the port #3, and so on are similarly compensated. Thus, when the number of ports is N, at most N-1 phase compensating units 700 or 700a are required, but the functions for obtaining the phase difference or the path difference, that is, the delay adjusting units 702 and 705 (716 and 717), the frequency transforming units 703 and 706, the low pass filters 704 and 707, the complex multiplier 708, the limiter 709, the autocorrelation detecting unit 710, and the path delay difference detecting unit 711 may be downsized by using them in time-division manner when the time variation of the phase difference or the path difference is slow. In this case, a single circuit for obtaining the phase difference or the path difference between ports is commoditized, and thus the size of the circuit for obtaining the phase difference or the path difference is reduced to 1/(N-1).

### Fifth embodiment

In a fifth embodiment, the processing of the terrestrial receiving station 401 is changed to implement more excellent demodulation performance.

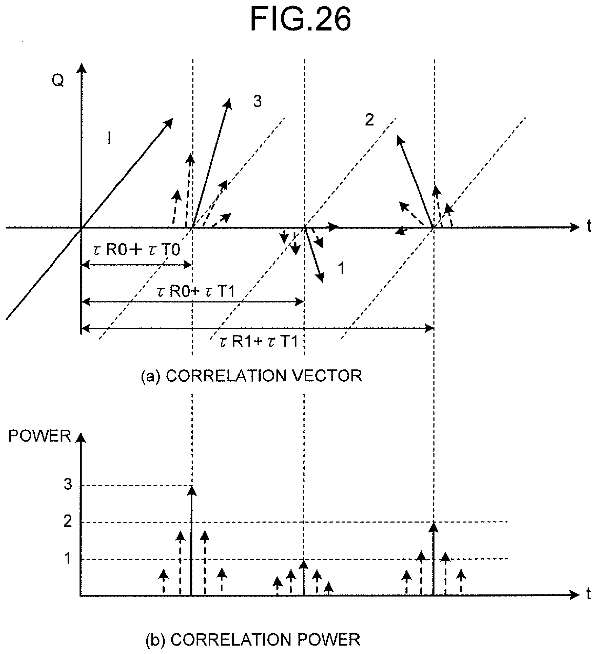

The synthesizing unit 513 (see FIGS. 4 and 5) of the receiving station 401 according to the first embodiment aligns the positions of the three correlation vectors illustrated in FIG. 13 with the vector position of the third path through the delay control process performed on each of the cross-correlation data series that are branched into three. However, to be exact, the correlation vectors include not only the three signal vectors presenting peak values depicted by solid lines, but also a plurality of correlation vectors, indicated by dotted lines, around the three as illustrated in FIG. 26. Thus, the synthesizing unit 513 may synthesize not only vectors at the three points corresponding to the peak values of the correlation vectors but also the correlation vectors around the three points together, thereby making it possible to implement more excellent demodulation performance.

Even though not illustrated in the drawings, when the total number of vectors to be synthesized is K, the vector phase detecting unit 512 detects K vectors, and the synthesizing unit 513 is configured with K-1 delay units, K-1 phase shifters, an adder that vector-synthesizes K pieces of delayed or phase-shifted cross-correlation data, and a latch.

### Sixth embodiment

A sixth embodiment will be described in connection with a configuration example in which digital beam foaming (DBF) is combined therewith.

The present embodiment is made to solve a problem in that it is difficult to relay a broadband signal due to performance limits of space devices when a beam is formed by digital signal processing based on the DBF.

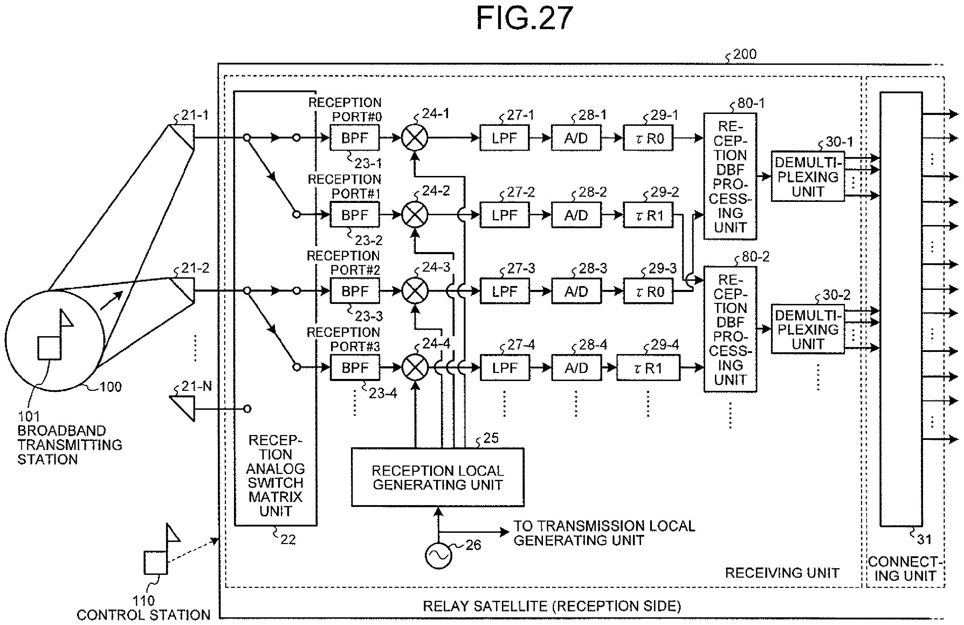

FIG. 27 is a diagram illustrating an internal configuration example of a receiving unit performing reception side processing in a relay satellite according to the sixth embodiment. The same components as in the receiving unit (see FIG. 2) described in the first embodiment are denoted by the same reference symbols. The receiving unit according to the present embodiment is configured such that reception DBF processing units 80-1, 80-2, ... are added between the delay circuits 29 and the demultiplexing units 30. In FIG. 27, as the components for the port #3 are concretely illustrated, the reference symbols are added (the band pass filter 23-4, the mixer 24-4, the low pass filter 27-4, the A/D 28-4, and the delay circuit 29-4).

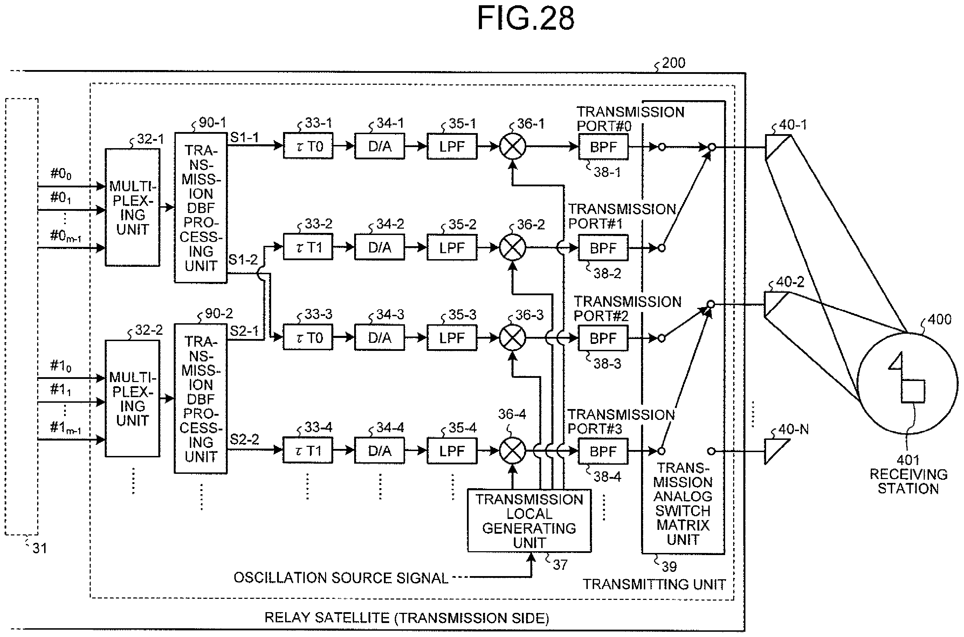

FIG. 28 is a diagram illustrating an internal configuration example of a transmitting unit performing transmission side processing in the relay satellite according to the sixth embodiment. The same components as in the transmitting unit (see FIG. 3) described in the first embodiment are denoted by the same reference symbols. The transmitting unit according to the present embodiment is configured such that transmission DBF processing units 90-1, 90-2, ... are added between the multiplexing units 32 and the delay circuits 33. In FIG. 28, as the components for the port #3 are concretely illustrated, the reference symbols are added (the delay circuit 33-4, the D/A 34-4, the low pass filter 35-4, the mixer 36-4, and the band pass filter 38-4).

Next, a reception operation performed by the relay satellite 200 according to the present embodiment will be described with reference to FIG. 27. The relay satellite 200 (the reception side) uses the reception antennas 21-1 and 21-2 as element antennas, and forms a beam toward the broadband beam area 100 using the two element antennas to receive the broadband signal A from the broadband transmitting station 101. The reception analog switch matrix unit 22 connects the signal of the reception antenna 21-1 to the port #0 and the port #1, and connects the signal of the reception antenna 21-2 to the port #2 and the port #3.

The operations of the band pass filter 23-1, the mixer 24-1, the low pass filter 27-1, the A/D 28-1 and the delay circuit 29-1 for processing the signal inputted from the port #0 are the same as in the first embodiment. In other words, a signal corresponding to a lower band side half component of the broadband signal A received by the reception antenna 21-1 is extracted.

The band pass filter 23-3, the mixer 24-3, the low pass filter 27-3, the A/D 28-3 and the delay circuit 29-3 for processing the signal inputted from the port #2 execute the same processing as the processing performed on the signal inputted from the port #0, and so a signal corresponding to lower band side half component of the broadband signal A received by the reception antenna 21-2 is extracted. The delay amount of the delay circuit 29-3 is set to τR0 that is the same as the delay amount of the delay circuit 29-1.

Further, the band pass filter 23-2, the mixer 24-2, the low pass filter 27-2, the A/D 28-2, and the delay circuit 29-2 for processing the signal inputted from the port #1 execute the same processing as in the components for processing the signal inputted from the port #0, and so a signal corresponding to a higher band side half component of the broadband signal A received by the reception antenna 21-1 is extracted.

Similarly, the band pass filter 23-4, the mixer 24-4, the low pass filter 27-4, the A/D 28-4, and the delay circuit 29-4 for processing the signal inputted from the port #3 execute the same processing as in the components for processing the signal inputted from the port #2, and so a signal corresponding to a higher band side half component of the broadband signal A received by the reception antenna 21-2 is extracted. The delay amount of the delay circuit 29-4 is set to τR1 that is the same as the delay amount of the delay circuit 29-2.

The reception DBF processing unit 80-1 executes the following processes [1], [2] and [3], and generates a lower band side component of the broadband signal A.
[1] A lower band side component of the signal A inputted from the delay circuit 29-1 is multiplied by a weight value W1 for the reception antenna 21-1.
[2] A lower band side component of the signal A inputted from the delay circuit 29-3 is multiplied by a weight value W2 for the reception antenna 21-2.
[3] The multiplication results obtained by executing the processes [1] and [2] are summed.

Similarly, the reception DBF processing unit 80-2 executes the following processes [4], [5] and [6], and generates a higher band side component of the broadband signal A.
[4] A higher band side component of the signal A inputted from the delay circuit 29-2 is multiplied by the weight value WR1 for the reception antenna 21-1.
[5] A higher band side component of the signal A inputted from the delay circuit 29-4 is multiplied by the weight value WR2 for the reception antenna 21-2.
[6] The multiplication results obtained by executing the processes [4] and [5] are summed.

The subsequent process is the same as in the first embodiment, and the demultiplexing unit 30-1 demultiplexes the lower band side component of the broadband signal A, and the demultiplexing unit 30-2 demultiplexes the higher band side component of the broadband signal A.

Next, a transmission operation performed by the relay satellite 200 according to the present embodiment will be described with reference to FIG. 28. The relay satellite 200 (the transmission side) uses the transmission antennas 40-1 and 40-2 as element antennas, forms a beam toward the beam area 400 using the two element antennas, and transmits the broadband signal A to the receiving station 401. In this case, the transmission analog switch matrix unit 39 connects the signals from the port #0 and the port #1 to the transmission antenna 40-1 and connects the signals from the port #2 and the port #3 to the transmission antenna 40-2.

A process of the multiplexing units 32-1 and 32-2 is the same as in the first embodiment. In other words, the multiplexing unit 32-1 multiplexes the signals (1), (2), (3) and (4) illustrated in FIG. 10, and outputs the signal (iii) illustrated in FIG. 10. Further, the multiplexing unit 32-2 multiplexes the signals (5) and (6) illustrated in FIG. 10, and outputs the signal (iv) illustrated in FIG. 10.

The transmission DBF processing unit 90-1 executes the following processes [7] and [8], and generates two lower band component signals S1-1 and S1-2.
[7] A signal inputted from the multiplexing unit 32-1 is multiplied by a weight value WT1 for the antenna element 40-1, and the multiplication result is outputted as the lower band component signal S1-1.
[8] A signal inputted from the multiplexing unit 32-1 is multiplied by a weight value WT2 for the antenna element 40-2, and the multiplication result is outputted as the lower band component signal S1-2.

Similarly, the transmission DBF processing unit 90-2 executes the following processes [9] and [10], and generates two higher band component signals S2-1 and S2-2.
[9] A signal inputted from the multiplexing unit 32-2 is multiplied by the weight value WT1 for the antenna element 40-1, and the multiplication result is outputted as the higher band component signal S2-1.
[10] A signal inputted from the multiplexing unit 32-2 is multiplied by a weight value WT2 for the antenna element 40-2, and the multiplication result is outputted as the higher band component signal S2-2.

Among the blocks at the stage subsequent to the transmission DBF processing units 90-1 and 90-2, the delay circuit 33-1, the D/A 34-1, the low pass filter 35-1, the mixer 36-1, and the band pass filter 38-1 execute the same process as in the first embodiment on the lower band component signal S1-1 outputted from the transmission DBF processing unit 90-1, and generate the lower band side component of the signal to be transmitted from the transmission antenna 40-1.

Further, the delay circuit 33-2, the D/A 34-2, the low pass filter 35-2, the mixer 36-2, and the band pass filter 38-2 execute the same process as in the first embodiment on the higher band component signal S2-1 outputted from the transmission DBF processing unit 90-2, and generate the higher band side component of the signal to be transmitted from the transmission antenna 40-1.

Similarly, the delay circuit 33-3, the D/A 34-3, the low pass filter 35-3, the mixer 36-3, and the band pass filter 38-3 execute the same process as in the first embodiment on the lower band component signal S1-2 outputted from the transmission DBF processing unit 90-1, and generate the lower band side component of the signal to be transmitted from the transmission antenna 40-2.

Further, the delay circuit 33-4, the D/A 34-4, the low pass filter 35-4, the mixer 36-4, and the band pass filter 38-4 execute the same process as in the first embodiment on the higher band component signal S2-2 outputted from the transmission DBF processing unit 90-2, and generate the higher band side component of the signal to be transmitted from the transmission antenna 40-2.

Through this transmission processing, the relay satellite 200 according to the present embodiment forms a beam toward the beam area 400, and transmits the broadband signal A' that is given the delay difference to the receiving station 401, similarly to the first embodiment.

The receiving station 401 executes the same process as in the first embodiment, and demodulates the received broadband signal A'.

As described above, in the present embodiment, when the broadband signal A is satellite-relayed by the DBF, a relay is shared by a plurality of ports for performing the lower band side component of the broadband signal and a plurality of ports for performing the higher band side component thereof. Thus, even when the DBF is applied, the space device having the low sampling speed can be applied. Further, high-speed beam pattern switching unique to the DBF and increase of high antenna gain can be implemented.

It is noted that the present embodiment has been described in connection with the configuration example in which the two reception antenna elements and the two transmission antenna elements are used, but the number of antenna elements may be three or more. In this case, when the number of elements for the reception antenna or the transmission antenna is N, the number of ports of the relay satellite 200 is 2N.

Further, the present embodiment has been described in connection with the example in which in the relay satellite 200, a reception beam is a single beam (the broadband beam area 100), and a transmission beam is a single beam (the beam area 400), but the number of reception beams or the number of transmission beams may be two or more. In this case, the reception DBF processing units (the reception DBF processing units 80-1 and 80-2) generate M reception beam signals from N pieces of input element data. In other words, the reception DBF processing units 80-1 and 80-2 execute a process of multiplying N pieces of input element data by N weight values used to form a single beam and then outputting a summation result of the multiplication results as a reception signal of a corresponding beam, for M beams at the same time. Similarly, the transmission DBF processing units (the transmission DBF processing units 90-1 and 90-2) generate N pieces of output element data from M transmission beam signals. In other words, the transmission DBF processing units 90-1 and 90-2 execute a process of making N copies of each transmission beam signal and multiplying the transmission beam signal copies by N weight values, respectively, for M beams at the same time. Further, the transmission DBF processing units 90-1 and 90-2 add all of signals directed to the same transmission antenna to generate N pieces of output element data, and outputs the N pieces of output element data.

Further, the present embodiment has been described in connection with the operation example in which the DBF process is combined with {the demultiplexing process, the multiplexing process}, but only the DBF process may be performed to relay the signal. In this case, the function of re-allocating the frequency of each signal at the time of satellite relay is disabled, but an operation for the satellite to just connect the beams with each other is performed. However, the demultiplexing units 30-1 and 30-2 and the multiplexing units 32-1 and 32-2 are unnecessary, and the digital switch matrix unit has a simple configuration of just connecting the beams with each other, so that the circuit size can be reduced.

### Industrial Applicability

As described above, a relay satellite according to the present invention is useful for construction of a satellite communication system, and, particularly, suitable for a relay device of a satellite communication system capable of relaying a broadband signal exceeding a performance limit of a device (space device) constituting the satellite.

### Reference Signs List

- 21-1, 21-2, 21-N: reception antenna
- 22: reception analog switch matrix unit
- 23-1, 23-2, 23-3, 23-N: band pass filter (BPF)
- 24-1, 24-2, 24-3, 24-N: mixer
- 25: reception local generating unit
- 26: oscillation source
- 27-1, 27-2, 27-3, 27-N: low pass filter (LPF)
- 28-1, 28-2, 28-3, 28-N: AD converter (A/D)
- 29-1, 29-2, 29-3, 29-N: delay circuit
- 30-1, 30-2, 30-3, 30-N: demultiplexing unit
- 31, 31a: digital switch matrix unit
- 32-1, 32-2, 32-3, 32-N: multiplexing unit
- 33-1, 33-2, 33-3, 33-N: delay circuit
- 34-1, 34-2, 34-3, 34-N: DA converter (D/A)
- 35-1, 35-2, 35-3, 35-N: low pass filter (LPF)
- 36-1, 36-2, 36-3, 36-N: mixer
- 37: transmission local generating unit
- 38-1, 38-2, 38-3, 38-N: band pass filter (BPF)
- 39: transmission analog switch matrix unit
- 40-1, 40-2, 40-N: transmission antenna
- 80-1, 80-2: reception DBF processing unit
- 90-1, 90-2: transmission DBF processing unit
- 100: broadband beam area
- 101: broadband transmitting station
- 102: narrowband beam area
- 103, 104, 105: narrowband transmitting station
- 110: control station
- 200: relay satellite
- 400, 402: beam area
- 401, 403: receiving station
- 500: antenna
- 501: amplifier
- 502: band pass filter (BPF)
- 503: mixer
- 504: reception local generating unit
- 505: low pass filter (LPF)
- 506: AD converter (A/D)
- 507: demultiplexing unit
- 508, 509: narrowband signal demodulator
- 510, 510a: broadband signal demodulator
- 511, 521: cross-correlating unit
- 512: vector phase detecting unit
- 513: synthesizing unit
- 514, 524: wave detecting unit
- 522: transmission path estimating unit
- 523: equalizing unit
- 600, 601: delay unit
- 610, 611: phase shifter
- 620: adder
- 700, 700a: phase compensating unit
- 701: switch unit
- 702, 705, 716, 717: delay adjusting unit
- 703, 706: frequency transforming unit
- 704, 707: low pass filter
- 708, 712, 713, 714, 715: complex multiplier
- 709: limiter
- 710: autocorrelation detecting unit
- 711: path delay difference detecting unit

## Claims

1. A relay satellite (200), comprising:
a plurality of reception antennas (21-1, 21-2, ... , 21-N);
a plurality of reception processing units;
a plurality of transmission processing units;
a plurality of transmission antennas (40-1, 40-2, ... , 40-N); **characterised by**
a first switch unit (22) that outputs a signal received by each of the plurality of reception antennas (21-1, 21,2, ... , 21-N) to one or more of the reception processing units;
a second switch unit (31) that outputs a digital reception signal obtained by reception processing performed by each of the plurality of reception processing units to one or more of the transmission processing units; and
a third switch unit (39) that outputs an analog signal obtained by transmission processing performed by each of the plurality of transmission processing units to one of the transmission antennas (40-1, 40-2, ... , 40-N),
wherein when a reception signal having a band broader than a band processable by the reception processing unit is inputted, the first switch unit (22) outputs a broadband reception signal to the plurality of reception processing units, and
when a signal having a band broader than a band processable by the reception processing unit is inputted, the reception processing unit performs reception processing on a part of the band of the input signal.

2. The relay satellite (200) according to claim 1,
wherein the plurality of reception antennas (21-1, 21-2, ... , 21-N) are connected with the plurality of reception processing units in a one-to-one manner, and
the reception antenna is an antenna whose directivity is adjustable, and the first switch unit (22) is omitted.

3. The relay satellite (200) according to claim 1 or 2,
wherein the reception processing units to which the same broadband reception signal has been inputted perform reception processing on bands different from each other, respectively.

4. The relay satellite (200) according to claim 3,
wherein bands of processing target signals in the reception processing units to which the same broadband reception signal has been inputted are set to become the same band as the broadband reception signal when the processing target signals are synthesized.

5. The relay satellite (200) according to any one of claims 1 to 4,
wherein the reception processing unit includes:
a processing target signal extracting unit that extracts a component of a band to be processed when a reception signal having a band broader than a band processable by the processing target signal extracting unit is inputted, and transforms the extracted component into an intermediate frequency signal or a base band signal;
an AD converting unit (28-1, 28-2, ... , 28-N) that converts a signal outputted from the processing target signal extracting unit into a digital signal; and
a demultiplexing unit (30-1, 30-2, ... , 30-N) that demultiplexes the digital signal into a plurality of signals,
wherein the second switch unit (31) allocates the after-demultiplex signals according to a band processable by each transmission processing unit at a subsequent stage.

6. The relay satellite (200) according to claim 5,
wherein the second switch unit (31) allocates the after-demultiplex signals in such a manner that a total band of the allocated signals for each transmission processing unit is equal to or less than a band processable by a corresponding transmission processing unit.

7. The relay satellite (200) according to claim 5 or 6, wherein
the reception processing unit further includes a first delay adding unit (29-1, 29-2, ... , 29-N) that gives a delay having a value different from the other reception processing unit to the digital signal outputted from the AD converting unit,
the demultiplexing unit (30-1, 30-2, ... , 30-N) demultiplexes a signal having a delay added by the first delay adding unit (29-1, 29-2, ... , 29-N), and
the transmission processing unit includes:
- a multiplexing unit (32-1, 32-2, ... , 32-N) that multiplexes signals inputted from the second switch unit (31),
- a second delay adding unit (33-1, 33-2, ... , 33-N) that gives a delay having a value different from the other transmission processing unit to a signal outputted from the multiplexing unit (32-1, 32-2, ... , 32-N),
- a DA converting unit (34-1, 34-2, ... , 34-N) that converts a signal outputted from the second delay adding unit into an analog signal, and
- a transforming unit that transforms a signal outputted from the DA converting unit (34-1, 34-2, ... , 34-N) into a radio frequency band signal.

8. The relay satellite (200) according to any one of claims 1 to 6,
wherein the second switch unit (31) includes:
a compensation processing unit (700) that compensates a phase discontinuity and a path delay difference that exist between digital reception signals including identical components; and
a switch unit (701) that outputs the digital reception signal in which the phase discontinuity and path delay difference have been compensated by the compensation processing unit (700) to one or more of the transmission processing units.

9. The relay satellite (200) according to claim 8,
wherein the compensation processing unit (700) includes:
a complex multiplier (708) that complex-multiplies one of the identical components included in both of the two digital reception signals by a complex conjugate value of the other in a frequency domain to calculate a correlation value;
a delay difference compensating unit that compensates a path delay difference existing between the two digital reception signals based on the correlation value; and
a phase compensating unit that compensates a phase discontinuity existing between the digital reception signals in which the path delay difference has been compensated by the delay difference compensating unit.

10. The relay satellite (200) according to claim 1, wherein the reception antennas (21-1, 21-2, ... , 21-N) form a plurality of reception beams based on beam foaming and the transmission antennas (40-1, 40-2, ... , 40-N) form a plurality of transmission beams based on beam foaming; the relay satellite (200) further comprising:
a plurality of reception signal synthesizing units that synthesize digital reception signals having identical components among a plurality of digital reception signals obtained by reception processing performed by the plurality of reception processing units;
a plurality of demultiplexing units (30-1, 30-2, ...) that correspond to the plurality of reception signal synthesizing units in a one-to-one manner, and demultiplex a signal outputted from a corresponding reception signal synthesizing unit into a plurality of signals;
a second switch unit (31) that allocates each signal outputted from the demultiplexing unit (30-1, 30-2, ...) to one or more of the transmission antennas (40-1, 40-2, ..., 40-N);
a plurality of multiplexing units (32-1, 32-2, ...) that multiplex signals allocated to the same transmission antenna (40-1, 40-2, ... , 40-N) by the second switch unit (31);
a distributing unit that distributes signals outputted from the plurality of multiplexing units (32-1, 32-2, ...) to two or more of the plurality of transmission processing units; and
a third switch unit (39) that outputs analog signals generated based on the same component among analog signals obtained by transmission processing performed by the plurality of transmission processing units to different transmission antennas (40-1, 40-2, ... , 40-N) that form the same transmission beam.

11. A satellite communication system, comprising:
the relay satellite (200) according to any one of claims 1 to 10; and
a receiving station (401, 403) that receives a signal relayed by the relay satellite (200).

12. A satellite communication system, comprising:
the relay satellite (200) according to claim 7; and
a receiving station (401, 403) that receives a signal relayed by the relay satellite (200),
wherein the relay satellite (200) relays a spread spectrum signal, and
the receiving station (401, 403) includes:,
as a configuration for demodulating a signal having a band broader than a band processable by the reception processing unit among signals relayed by the relay satellite (200),
a cross-correlation calculating unit (511) that calculates a cross-correlation of a reception signal and a known back-diffusion code;
a detecting unit (512) that detects, based on a cross-correlation data series obtained by processing performed by the cross-correlation calculating unit (511), the number of cross-correlation vectors included in the series, an arrival time of each cross-correlation vector, and a phase angle of each cross-correlation vector;
a synthesizing unit (513) that synthesizes the plurality of cross-correlation vectors based on a detection result obtained by the detecting unit (512); and
a wave detecting unit (514) that performs detection processing on the cross-correlation vector obtained by the synthesis by the synthesizing unit (513).

13. The satellite communication system according to claim 12,
wherein the synthesizing unit (513) gives a delay according to a difference in arrival time of the cross-correlation vectors to each cross-correlation vector to cancel a difference between delay amounts individually added by a reception processing unit and a transmission processing unit of the relay satellite (200), performs adjustment such that phase angles of the cross-correlation vectors are aligned with each other, and adds the cross-correlation vectors obtained by the adjustment.

14. The satellite communication system according to claim 12 or 13,
wherein the synthesizing unit (513) synthesizes a cross-correlation vector representing a peak of a cross-correlation value of a reception signal and a back-diffusion code with a cross-correlation vector representing a cross-correlation value within a predetermined range around the peak.

15. The satellite communication system according to claim 12, 13 or 14, further comprising
a control station (110) that gives instructions on a delay amount given by the first delay adding unit and a delay amount given by the second delay adding unit to each reception processing unit and each transmission processing unit, and notifies the receiving station (401, 403) of instruction content and information of a position at which a phase becomes discontinuous in a signal relayed according to the instruction content,
wherein the detecting unit (512) detects the number of cross-correlation vectors, the arrival time, and the phase angle based on the cross-correlation data series and notification content from the control station (110).

16. The satellite communication system according to claim 11,
wherein the relay satellite (200) relays a signal in which a preamble is added to a modulation signal on which spectrum spreading is not executed, and
the receiving station (401, 403) includes:,
as a configuration for demodulating a signal having a band broader than a band processable by the reception processing unit among signals relayed by the relay satellite (200),
a transmission path estimating unit (522) that performs transmission path estimation based on the preamble;
an equalizing unit (523) that equalizes a reception modulation signal based on the transmission path estimation result; and
a wave detecting unit (524) that performs detection processing on the equalized signal.

## Patentansprüche

1. Relaissatellit (200), umfassend:
eine Vielzahl von Empfangsantennen (21-1, 21-2, ...., 21-N);
eine Vielzahl von Empfangsverarbeitungseinheiten;
eine Vielzahl von Sendeverarbeitungseinheiten;
eine Vielzahl von Sendeantennen (40-1, 40-2, ...., 40-N);
**gekennzeichnet durch**
eine erste Schalteinheit (22), die ein Signal, das von jeder der Vielzahl von Empfangsantennen (21-1, 21,2, ...., 21-N) empfangen wird, an eine oder mehrere der Empfangsverarbeitungseinheiten ausgibt;
eine zweite Schalteinheit (31), die ein digitales Empfangssignal, das durch eine Empfangsverarbeitung erhalten wird, die von jeder der Vielzahl von Empfangsverarbeitungseinheiten durchgeführt wird, an eine oder mehrere der Sendeverarbeitungseinheiten ausgibt; und
eine dritte Schalteinheit (39), die ein analoges Signal, das durch eine Sendeverarbeitung erhalten wird, die von jeder der Vielzahl von Sendeverarbeitungseinheiten durchgeführt wird, an eine der Sendeantennen (40-1, 40-2, ..... 40-N) ausgibt,
wobei, wenn ein Empfangssignal mit einem Band, das breiter als ein Band ist, das durch die Empfangsverarbeitungseinheit verarbeitet werden kann, eingegeben wird, die erste Schalteinheit (22) ein Breitband-Empfangssignal an die Vielzahl der Empfangsverarbeitungseinheiten ausgibt, und
wenn ein Signal mit einem Band, das breiter als ein Band ist, das durch die Empfangsverarbeitungseinheit verarbeitet werden kann, eingegeben wird, die Empfangsverarbeitungseinheit eine Empfangsverarbeitung an einem Teil des Bandes des Eingangssignals durchführt.

2. Relaissatellit (200) nach Anspruch 1,
wobei die Vielzahl von Empfangsantennen (21-1, 21-2, ...., 21-N) mit der Vielzahl von Empfangsverarbeitungseinheiten eins-zu-eins verbunden sind, und
die Empfangsantenne eine Antenne ist, deren Richtwirkung einstellbar ist, und die erste Schalteinheit (22) entfällt.

3. Relaissatellit (200) nach Anspruch 1 oder 2,
wobei die Empfangsverarbeitungseinheiten, in die das gleiche Breitband-Empfangssignal eingegeben wurde, die Empfangsverarbeitung auf jeweils voneinander unterschiedlichen Bändern durchführen.

4. Relaissatellit (200) nach Anspruch 3,
wobei Bänder von Verarbeitungszielsignalen in den Empfangsverarbeitungseinheiten, in die das gleiche Breitband-Empfangssignal eingegeben wurde, eingestellt sind, das gleiche Band wie das Breitband-Empfangssignal zu werden, wenn die Verarbeitungszielsignale synthetisiert werden.

5. Relaissatellit (200) nach einem der Ansprüche 1 bis 4,
wobei die Empfangsverarbeitungseinheit Folgendes beinhaltet:
eine Verarbeitungszielsignal-Extrahierungseinheit, die eine Komponente eines zu verarbeitenden Bandes extrahiert, wenn ein Empfangssignal mit einem breiteren Band als ein Band, das von der Verarbeitungszielsignal-Extrahierungseinheit verarbeitet werden kann, eingegeben wird, und die extrahierte Komponente in ein Zwischenfrequenzsignal oder ein Basisbandsignal umwandelt;
eine AD-Umwandlungseinheit (28-1, 28-2, ...., 28-N), die ein von der Verarbeitungszielsignal-Extrahierungseinheit ausgegebenes Signal in ein digitales Signal umwandelt; und
eine Demultiplex-Einheit (30-1, 30-2, ...., 30-N), die das digitale Signal in eine Vielzahl von Signalen demultiplext,
wobei die zweite Schalteinheit (31) die Nach-Demultiplex-Signale gemäß einem Band zuordnet, das von jeder Sendeverarbeitungseinheit in einer nachfolgenden Stufe verarbeitet werden kann.

6. Relaissatellit (200) nach Anspruch 5,
wobei die zweite Schalteinheit (31) die Nach-Demultiplex-Signale so zuordnet, dass ein Gesamtband der zugeordneten Signale für jede Sendeverarbeitungseinheit gleich oder kleiner als ein Band ist, das von einer entsprechenden Sendeverarbeitungseinheit verarbeitet werden kann.

7. Relaissatellit (200) nach Anspruch 5 oder 6, wobei
die Empfangsverarbeitungseinheit ferner eine erste Verzögerungszugabeeinheit (29-1, 29-2, ...., 29-N) umfasst, die eine Verzögerung, die einen von der anderen Empfangsverarbeitungseinheit verschiedenen Wert aufweist, zu dem von der AD-Umwandlungseinheit ausgegebenen digitalen Signal gibt,
die Demultiplex-Einheit (30-1, 30-2, ...., 30-N) ein Signal demultiplext, das eine Verzögerung aufweist, die durch die erste Verzögerungszugabeeinheit (29-1, 29-2, ...., 29-N) hinzugefügt wurde, und
die Sendeverarbeitungseinheit umfasst:
- eine Multiplex-Einheit (32-1, 32-2, ...., 32-N), die Signale multiplext, die von der zweiten Schalteinheit (31) eingegeben werden,
- eine zweite Verzögerungszugabeeinheit (33-1, 33-2, ...., 33-N), die eine Verzögerung, die einen von der anderen Sendeverarbeitungseinheit veschiedenen Wert aufweist, an ein Signal liefert, das von der Multiplex-Einheit (32-1, 32-2, ..., 32-N) ausgegeben wird,
- eine DA-Umwandlungseinheit (34-1, 34-2, ...., 34-N), die ein von der zweiten Verzögerungszugabeeinheit ausgegebenes Signal in ein analoges Signal umwandelt, und
- eine Umformeinheit, die ein von der DA-Umwandlungseinheit (34-1, 34-2, ....., 34-N) ausgegebenes Signal in ein Radiofrequenzbandsignal umformt.

8. Relaissatellit (200) nach einem der Ansprüche 1 bis 6,
wobei die zweite Schalteinheit (31) umfasst:
eine Kompensationsverarbeitungseinheit (700), die eine Phasendiskontinuität und eine Pfadverzögerungsdifferenz kompensiert, die zwischen digitalen Empfangssignalen mit identischen Komponenten bestehen; und
eine Schalteinheit (701), die das digitale Empfangssignal, bei dem die Phasendiskontinuität und die Pfadverzögerungsdifferenz durch die Kompensationsverarbeitungseinheit (700) kompensiert wurden, an eine oder mehrere der Sendeverarbeitungseinheiten ausgibt.

9. Relaissatellit (200) nach Anspruch 8,
wobei die Kompensationsverarbeitungseinheit (700) umfasst:
einen Komplex-Multiplizierer (708), der eine der identischen Komponenten, die in beiden der zwei digitalen Empfangssignale enthalten sind, mit einem komplex konjugierten Wert der anderen in einem Frequenzbereich komplex multipliziert, um einen Korrelationswert zu berechnen;
eine Verzögerungsdifferenzkompensationseinheit, die eine zwischen den beiden digitalen Empfangssignalen bestehende Pfadverzögerungsdifferenz auf Grundlage des Korrelationswertes kompensiert; und
eine Phasenkompensationseinheit, die eine zwischen den digitalen Empfangssignalen bestehende Phasendiskontinuität kompensiert, bei denen die Pfadverzögerungsdifferenz durch die Verzögerungsdifferenzkompensationseinheit kompensiert wurde.

10. Relaissatellit (200) nach Anspruch 1, wobei die Empfangsantennen (21-1, 21-2, ....., 21-N) eine Vielzahl von Empfangsstrahlen auf Grundlage von Strahlformung bilden und die Sendeantennen (40-1, 40-2, ...., 40-N) eine Vielzahl von Sendestrahlen auf Grundlage von Strahlformung bilden; wobei der Relaissatellit (200) ferner umfasst:
eine Vielzahl von Empfangssignal-Synthetisiereinheiten, die digitale Empfangssignale synthetisieren, die unter einer Vielzahl von digitalen Empfangssignalen, die durch die von der Vielzahl von Empfangsverarbeitungseinheiten durchgeführte Empfangsverarbeitung erhalten werden, identische Komponenten aufweisen;
eine Vielzahl von Demultiplex-Einheiten (30-1, 30-2, ....), die der Vielzahl von Empfangssignal-Synthetisiereinheiten eins-zu-eins entsprechen und ein von einer entsprechenden Empfangssignal-Synthetisiereinheit ausgegebenes Signal in eine Vielzahl von Signalen demultiplexen;
eine zweite Schalteinheit (31), die jedes von der Demultiplex-Einheit (30-1, 30-2, ...) ausgegebene Signal einer oder mehreren der Sendeantennen (40-1, 40-2, ...., 40-N) zuordnet;
eine Vielzahl von Multiplex-Einheiten (32-1, 32-2, ...), die Signale multiplexen, die durch die zweite Schalteinheit (31) dergleichen Sendeantenne (40-1, 40-2, ...., 40-N) zugeordnet werden;
eine Verteilungseinheit, die Signale, die von der Vielzahl von Multiplex-Einheiten (32-1, 32-2, ....) ausgegeben werden, an zwei oder mehr der Vielzahl von Sendeverarbeitungseinheiten verteilt; und
eine dritte Schalteinheit (39), die auf Grundlage derselben Komponente unter analogen Signalen, die durch die von der Vielzahl von Sendeverarbeitungseinheiten durchgeführte Sendeverarbeitung erhalten werden, erzeugte analoge Signale an verschiedene Sendeantennen (40-1, 40-2, ...., 40-N), die den gleichen Sendestrahl bilden, ausgibt.

11. Satellitenkommunikationssystem, umfassend:
den Relaissatelliten (200) nach einem der Ansprüche 1 bis 10; und
eine Empfangsstation (401, 403), die ein Signal empfängt, das von dem Relaissatelliten (200) weitergeleitet wird.

12. Satellitenkommunikationssystem, umfassend:
den Relaissatelliten (200) nach Anspruch 7; und
eine Empfangsstation (401, 403), die ein Signal empfängt, das von dem Relaissatelliten (200) weitergeleitet wird,
wobei der Relaissatellit (200) ein Spreizspektrum-Signal weiterleitet, und
die Empfangsstation (401, 403) umfasst:
als eine Konfiguration zum Demodulieren eines Signals, das ein Band aufweist, das breiter ist als ein Band, das durch die Empfangsverarbeitungseinheit verarbeitet werden kann, unter von dem Relaissatelliten (200) weitergeleiteten Signalen,
eine Kreuzkorrelations-Berechnungseinheit (511), die eine Kreuzkorrelation eines Empfangssignals und eines bekannten Rückdiffusionscodes berechnet;
eine Erfassungseinheit (512), die auf Grundlage einer Kreuzkorrelationsdatenreihe, die durch von der Kreuzkorrelationsberechnungseinheit (511) durchgeführte Verarbeitung erhalten wird, die Anzahl der in der Reihe enthaltenen Kreuzkorrelationsvektoren, eine Ankunftszeit jedes Kreuzkorrelationsvektors und einen Phasenwinkel jedes Kreuzkorrelationsvektors erfasst;
eine Synthetisiereinheit (513), die die Vielzahl von Kreuzkorrelationsvektoren auf Grundlage eines von der Erfassungseinheit (512) erhaltenen Erfassungsergebnisses synthetisiert; und
eine Wellenerfassungseinheit (514), die eine Erfassungsverarbeitung an dem durch die Synthese der Synthetisiereinheit (513) erhaltenen Kreuzkorrelationsvektor durchführt.

13. Satellitenkommunikationssystem nach Anspruch 12,
wobei die Synthetisiereinheit (513) eine Verzögerung gemäß einer Differenz in der Ankunftszeit der Kreuzkorrelationsvektoren an jeden Kreuzkorrelationsvektor liefert, um eine Differenz zwischen Verzögerungsgrößen zu beseitigen, die individuell durch eine Empfangsverarbeitungseinheit und eine Sendeverarbeitungseinheit des Relaissatelliten (200) hinzugefügt wurden, eine Anpassung derart durchführt, dass Phasenwinkel der Kreuzkorrelationsvektoren aufeinander abgestimmt sind, und die durch die Anpassung erhaltenen Kreuzkorrelationsvektoren addiert.

14. Satellitenkommunikationssystem nach Anspruch 12 oder 13,
wobei die Synthetisiereinheit (513) einen Kreuzkorrelationsvektor synthetisiert, der eine Spitze eines Kreuzkorrelationswertes eines Empfangssignals und eines Rückdiffusionscodes mit einem Kreuzkorrelationsvektor darstellt, der einen Kreuzkorrelationswert innerhalb eines vorgegebenen Bereichs um die Spitze darstellt.

15. Satellitenkommunikationssystem nach Anspruch 12, 13 oder 14, ferner umfassend:
eine Steuerstation (110), die Anweisungen über eine Verzögerungsgröße, die durch die erste Verzögerungszugabeeinheit gegeben ist, und eine Verzögerungsgröße, die durch die zweite Verzögerungszugabeeinheit gegeben ist, an jede Empfangsverarbeitungseinheit und jede Sendeverarbeitungseinheit liefert und die Empfangsstation (401, 403) über Anweisungsinhalte und Informationen einer Position, an der eine Phase in einem weitergeleiteten Signal diskontinuierlich wird, benachrichtigt gemäß dem Anweisungsinhalt,
wobei die Erfassungseinheit (512) die Anzahl der Kreuzkorrelationsvektoren, die Ankunftszeit und den Phasenwinkel auf Grundlage der Kreuzkorrelationsdatenreihe und dem Benachrichtigungsinhalt von der Steuerstation (110) erfasst.

16. Satellitenkommunikationssystem nach Anspruch 11,
wobei der Relaissatellit (200) ein Signal weiterleitet, in dem eine Präambel zu einem Modulationssignal hinzugefügt wird, an dem keine Spektrumsspreizung ausgeführt wird, und
die Empfangsstation (401, 403) umfasst:,
als eine Konfiguration zum Demodulieren eines Signals, das ein Band aufweist, das breiter ist als ein Band, das durch die Empfangsverarbeitungseinheit verarbeitet werden kann, unter von dem Relaissatelliten (200) weitergeleiteten Signalen,
eine Sendepfadschätzungseinheit (522), die eine Sendepfadschätzung auf Grundlage der Präambel durchführt;
eine Entzerrungseinheit (523), die ein Empfangsmodulationssignal auf Grundlage des Ergebnisses der Sendepfadschätzung entzerrt; und
eine Wellenerfassungseinheit (524), die eine Erfassungsverarbeitung an dem entzerrten Signal durchführt.

## Revendications

1. Satellite relais (200), comprenant :
une pluralité d'antennes de réception (21-1, 21-2, ..., 21-N) ;
une pluralité d'unités de traitement de réception ;
une pluralité d'unités de traitement de transmission ;
une pluralité d'antennes de transmission (40-1, 40-2, ..., 40-N) ; **caractérisé par**
une première unité de commutation (22) qui fournit en sortie un signal reçu par chacune de la pluralité d'antennes de réception (21-1, 21-2, ..., 21-N) à une ou plusieurs des unités de traitement de réception ;
une deuxième unité de commutation (31) qui fournit en sortie un signal de réception numérique, obtenu par un traitement de réception mis en oeuvre par chacune de la pluralité d'unités de traitement de réception, à une ou plusieurs des unités de traitement de transmission ; et
une troisième unité de commutation (39) qui fournit en sortie un signal analogique, obtenu par un traitement de transmission mis en oeuvre par chacune de la pluralité d'unités de traitement de transmission, à l'une des antennes de transmission (40-1, 40-2, ..., 40-N) ;
dans lequel, lorsqu'un signal de réception présentant une bande plus large qu'une bande pouvant être traitée par l'unité de traitement de réception est appliqué en entrée, la première unité de commutation (22) fournit en sortie un signal de réception à large bande à la pluralité d'unités de traitement de réception ; et
lorsqu'un signal présentant une bande plus large qu'une bande pouvant être traitée par l'unité de traitement de réception est appliqué en entrée, l'unité de traitement de réception met en oeuvre un traitement de réception sur une partie de la bande du signal d'entrée.

2. Satellite relais (200) selon la revendication 1,
dans lequel les antennes de la pluralité d'antennes de réception (21-1, 21-2, ..., 21-N) sont connectées aux unités de la pluralité d'unités de traitement de réception, d'une manière biunivoque ; et
l'antenne de réception est une antenne dont la directivité est réglable, et la première unité de commutation (22) est omise.

3. Satellite relais (200) selon la revendication 1 ou 2,
dans lequel les unités de traitement de réception auxquelles le même signal de réception à large bande a été appliqué en entrée mettent en oeuvre un traitement de réception sur des bandes différentes les unes des autres, respectivement.

4. Satellite relais (200) selon la revendication 3,
dans lequel des bandes de signaux cibles de traitement dans les unités de traitement de réception auxquelles le même signal de réception à large bande a été appliqué en entrée sont définies pour devenir la même bande que celle du signal de réception à large bande lorsque les signaux cibles de traitement sont synthétisés.

5. Satellite relais (200) selon l'une quelconque des revendications 1 à 4,
dans lequel l'unité de traitement de réception inclut :
une unité d'extraction de signal cible de traitement qui extrait une composante d'une bande à traiter lorsqu'un signal de réception présentant une bande plus large qu'une bande pouvant être traitée par l'unité d'extraction de signal cible de traitement est appliqué en entrée, et qui transforme la composante extraite en signal de fréquence intermédiaire ou en signal de bande de base ;
une unité de conversion analogique-numérique (28-1, 28-2, ..., 28-N) qui convertit un signal fourni en sortie à partir de l'unité d'extraction de signal cible de traitement en un signal numérique ; et
une unité de démultiplexage (30-1, 30-2, ..., 30-N) qui démultiplexe le signal numérique en une pluralité de signaux ;
dans lequel la deuxième unité de commutation (31) affecte les signaux post-démultiplexage selon une bande pouvant être traitée par chaque unité de traitement de transmission à une étape subséquente.

6. Satellite relais (200) selon la revendication 5,
dans lequel la deuxième unité de commutation (31) affecte les signaux post-démultiplexage de telle manière qu'une bande totale des signaux affectés pour chaque unité de traitement de transmission est égale ou inférieure à une bande pouvant être traitée par une unité de traitement de transmission correspondante.

7. Satellite relais (200) selon la revendication 5 ou 6, dans lequel :
l'unité de traitement de réception inclut en outre une première unité d'ajout de retard (29-1, 29-2, ..., 29-N) qui attribue un retard, présentant une valeur différente de celle de l'autre unité de traitement de réception, au signal numérique fourni en sortie à partir de l'unité de conversion analogique-numérique ;
l'unité de démultiplexage (30-1, 30-2, ..., 30-N) démultiplexe un signal présentant un retard ajouté par la première unité d'ajout de retard (29-1, 29-2, ..., 29-N) ; et
l'unité de traitement de transmission inclut :
- une unité de multiplexage (32-1, 32-2, ..., 32-N) qui multiplexe des signaux appliqués en entrée à partir de la deuxième unité de commutation (31) ;
- une seconde unité d'ajout de retard (33-1, 33-2, ..., 33-N) qui attribue un retard, présentant une valeur différente de celle de l'autre unité de traitement de transmission, à un signal fourni en sortie à partir de l'unité de multiplexage (32-1, 32-2, ..., 32-N) ;
- une unité de conversion numérique-analogique (34-1, 34-2, ..., 34-N) qui convertit un signal fourni en sortie à partir de la seconde unité d'ajout de retard en un signal analogique ; et
- une unité de transformation qui transforme un signal fourni en sortie à partir de l'unité de conversion numérique-analogique (34-1, 34-2, ..., 34-N) en un signal de bande radiofréquence.

8. Satellite relais (200) selon l'une quelconque des revendications 1 à 6,
dans lequel la deuxième unité de commutation (31) inclut :
une unité de traitement de compensation (700) qui compense une discontinuité de phase et une différence de retard de trajet qui existent entre des signaux de réception numériques incluant des composantes identiques ; et
une unité de commutation (701) qui fournit en sortie le signal de réception numérique, dans lequel la discontinuité de phase et la différence de retard de trajet ont été compensées par l'unité de traitement de compensation (700), à une ou plusieurs des unités de traitement de transmission.

9. Satellite relais (200) selon la revendication 8,
dans lequel l'unité de traitement de compensation (700) inclut :
un multiplicateur complexe (708) qui effectue une multiplication complexe de l'une des composantes identiques incluses dans les deux signaux de réception numériques, par une valeur de conjugué complexe de l'autre, dans un domaine fréquentiel, en vue de calculer une valeur de corrélation ;
une unité de compensation de différence de retard qui compense une différence de retard de trajet existant entre les deux signaux de réception numériques sur la base de la valeur de corrélation ; et
une unité de compensation de phase qui compense une discontinuité de phase existant entre les signaux de réception numériques où la différence de retard de trajet a été compensée par l'unité de compensation de différence de retard.

10. Satellite relais (200) selon la revendication 1, dans lequel les antennes de réception (21-1, 21-2, ..., 21-N) forment une pluralité de faisceaux de réception sur la base d'une conformation de faisceaux, et les antennes de transmission (40-1, 40-2, ..., 40-N) forment une pluralité de faisceaux de transmission sur la base d'une conformation de faisceaux ; le satellite relais (200) comprenant en outre :
une pluralité d'unités de synthèse de signaux de réception qui synthétisent des signaux de réception numériques présentant des composantes identiques parmi une pluralité de signaux de réception numériques obtenus par un traitement de réception mis en oeuvre par la pluralité d'unités de traitement de réception ;
une pluralité d'unités de démultiplexage (30-1, 30-2, ...) qui correspondent à la pluralité d'unités de synthèse de signaux de réception, d'une manière biunivoque, et qui démultiplexent un signal fourni en sortie à partir d'une unité de synthèse de signaux de réception correspondante, en une pluralité de signaux ;
une deuxième unité de commutation (31) qui affecte chaque signal fourni en sortie à partir de l'unité de démultiplexage (30-1, 30-2, ...) à une ou plusieurs des antennes de transmission (40-1, 40-2, ..., 40-N) ;
une pluralité d'unités de multiplexage (32-1, 32-2, ...) multiplexant des signaux affectés à la même antenne de transmission (40-1, 40-2, ..., 40-N) par la deuxième unité de commutation (31) ;
une unité de distribution qui distribue des signaux fournis en sortie à partir de la pluralité d'unités de multiplexage (32-1, 32-2, ...), à deux unités ou plus de la pluralité d'unités de traitement de transmission ; et
une troisième unité de commutation (39) qui fournit en sortie des signaux analogiques générés sur la base de la même composante parmi des signaux analogiques obtenus par un traitement de transmission mis en oeuvre par la pluralité d'unités de traitement de transmission, à différentes antennes de transmission (40-1, 40-2, ..., 40-N) qui forment le même faisceau de transmission.

11. Système de communication par satellite, comprenant :
le satellite relais (200) selon l'une quelconque des revendications 1 à 10 ; et
une station de réception (401, 403) qui reçoit un signal relayé par le satellite relais (200).

12. Système de communication par satellite, comprenant :
le satellite relais (200) selon la revendication 7 ; et
une station de réception (401, 403) qui reçoit un signal relayé par le satellite relais (200) ;
dans lequel le satellite relais (200) relaie un signal à spectre étalé ; et
la station de réception (401, 403) inclut :
en tant qu'une configuration pour démoduler un signal présentant une bande plus large qu'une bande pouvant être traitée par l'unité de traitement de réception parmi les signaux relayés par le satellite relais (200) :
une unité de calcul de corrélation croisée (511) qui calcule une corrélation croisée d'un signal de réception et d'un code de rétrodiffusion connu ;
une unité de détection (512) qui détecte, sur la base d'une série de données de corrélation croisée obtenue par le biais d'un traitement mis en oeuvre par l'unité de calcul de corrélation croisée (511), le nombre de vecteurs de corrélation croisée inclus dans la série, un temps d'arrivée de chaque vecteur de corrélation croisée, et un angle de phase de chaque vecteur de corrélation croisée ;
une unité de synthèse (513) qui synthétise la pluralité de vecteurs de corrélation croisée sur la base d'un résultat de détection obtenu par l'unité de détection (512) ; et
une unité de détection d'ondes (514) qui met en oeuvre un traitement de détection sur le vecteur de corrélation croisée obtenu par la synthèse mise en oeuvre par l'unité de synthèse (513).

13. Système de communication par satellite selon la revendication 12,
dans lequel l'unité de synthèse (513) affecte un retard, selon une différence dans le temps d'arrivée des vecteurs de corrélation croisée, à chaque vecteur de corrélation croisée, en vue d'annuler une différence entre des quantités de retard ajoutées individuellement par une unité de traitement de réception et une unité de traitement de transmission du satellite relais (200), opère un ajustement de sorte que des angles de phase des vecteurs de corrélation croisée sont alignés les uns avec les autres, et ajoute les vecteurs de corrélation croisée obtenus dans le cadre de l'ajustement.

14. Système de communication par satellite selon la revendication 12 ou 13,
dans lequel l'unité de synthèse (513) synthétise un vecteur de corrélation croisée représentant une crête d'une valeur de corrélation croisée d'un signal de réception, et un code de rétrodiffusion avec un vecteur de corrélation croisée représentant une valeur de corrélation croisée, dans une plage prédéterminée autour de la crête.

15. Système de communication par satellite selon la revendication 12, 13 ou 14, comprenant en outre :
une station de commande (110) qui donne des instructions sur une quantité de retard attribuée par la première unité d'ajout de retard et sur une quantité de retard attribuée par la seconde unité d'ajout de retard, à chaque unité de traitement de réception et à chaque unité de traitement de transmission, et notifie, à la station de réception (401, 403), un contenu d'instructions et des informations d'une position à laquelle une phase devient discontinue dans un signal relayé selon le contenu d'instructions ;
dans lequel l'unité de détection (512) détecte le nombre de vecteurs de corrélation croisée, le temps d'arrivée et l'angle de phase, sur la base de la série de données de corrélation croisée et du contenu de notification en provenance de la station de commande (110).

16. Système de communication par satellite selon la revendication 11,
dans lequel le satellite relais (200) relaie un signal dans lequel un préambule est ajouté à un signal de modulation sur lequel un étalement de spectre n'est pas exécuté ; et
la station de réception (401, 403) inclut :
en tant qu'une configuration pour démoduler un signal présentant une bande plus large qu'une bande pouvant être traitée par l'unité de traitement de réception parmi des signaux relayés par le satellite relais (200) :
une unité d'estimation de trajet de transmission (522) qui opère une estimation de trajet de transmission sur la base du préambule ;
une unité d'égalisation (523) qui égalise un signal de modulation de réception sur la base du résultat d'estimation de trajet de transmission ; et
une unité de détection d'ondes (524) qui met en oeuvre un traitement de détection sur le signal égalisé.
